# EUROPEAN PATENT SPECIFICATION

(11) **EP 4 363 458 B1**
(45) Date of publication and mention of the grant of the patent: **10.09.2025**
(21) Application number: 22738407.0
(22) Date of filing: 23.06.2022
(51) Int. Cl.: C08F 8/22, C08F 36/02, C08F 283/06, C08F 293/00, C08L 53/00, C10M 107/38, C10M 119/22, C08F 14/26, C08F 214/26

(54) **COPOLYMERS COMPRISING (PER)FLUOROPOLYETHER CHAINS**
COPOLYMERE MIT (PER)FLUORPOLYETHER-KETTEN
COPOLYMÈRES COMPRENANT DES CHAÎNES (PER)FLUOROPOLYÉTHER

(30) Priority: 01.07.2021 EP 21183256
(43) Date of publication of application: 08.05.2024
(73) Proprietor: Syensqo Specialty Polymers Italy S.p.A., 20021 Bollate (MI) (IT)
(72) Inventor: DE PATTO, Ugo, 20815 Cogliate (MB) (IT); LOTIERZO, Andrea, 20861 Brugherio (MB) (IT); GUARDA, Pier Antonio, 20020 ARESE (MI) (IT)
(74) Representative: Viola, Laura Maria
(86) International application number: PCT/EP2022/067112
(87) International publication number: WO 2023/274823

(56) References cited:
- US-B2- 8 258 090
- KRUKOVSKY S P ET AL: "New fluorine-containing oligomers and polymers", JOURNAL OF FLUORINE CHEMISTRY, ELSEVIER, NL, vol. 96, no. 1, 24 June 1999 (1999-06-24), pages 31 - 33, XP004169811, ISSN: 0022-1139, DOI: 10.1016/S0022-1139(98)00324-8
- SIANESI D ET AL: "PERFLUOROPOLYETHERS (PFPES) FROM PERFLUOROOLEFIN PHOTOOXIDATION", ORGANOFLUORINE CHEMISTRY PRINCIPLES AND COMMERCIAL APPL, XX, XX, 1 January 1994 (1994-01-01), pages 431 - 461, XP001061330

## Description

### Technical Field

The present patent application relates to copolymers comprising (per)fluoropolyether chains, characterized by increased viscosity.

### Background Art

Lubrication is an important aspect of maintaining machinery in proper operating condition. Machine elements such as bearings, pins, shafts, gears and joints require proper lubrication between their moving surfaces to decrease friction, prevent contamination, reduce wear and dissipate heat. Improper lubrication is likely to lead to premature component wear and component or system failure.

(Per)fluoropolyether polymers (in the following referred to as "PFPE polymers") have been long known as base oils or as additives in several lubricant applications.

Several syntheses of PFPE polymers have been disclosed in the art. The first synthesis of unspecified perfluorinated polyether mixtures was reported in 1953, when an oily product was obtained in the course of photoligomerization of hexafluoropropene. Since then, a number of different perfluorinated polyethers have been synthesized and described in literature.

US 4500739 **(in the name of Montedison)** discloses the reaction of a peroxidic PFPE with - among the others - perfluoro butadiene (Group II of fluoroolefins). Example 4 discloses the reaction with perfluoro butadiene, with a large excess of perfluorinated bis-olefin, resulting in pendant unsaturated groups along the macromolecular chain such that the reaction can further proceed in the presence of hexamethylenediamine.

US 8,258,090 B2 **(in the name of Solvay Solexis S.p.A.)** discloses fluorinated lubricants of formula:

(I) T-O-[A-B]z-[A'-B']z'-A-T

wherein
T and T' are C₁₋₃ perfluoroalkyl or C₁₋₆ alkyl,
A and A are a perfluoropolyether chain,
B derives from two different olefins, of which at least one homopolymerizable by radical route, of formula:

   (Ia) -[(CR₁R₂-CR₃R₄)ⱼ-(CR₅R₆-CR₇R₈)_{j'}]-
wherein
j is from 1 to 5, j' is from 0 to 4 and the sum of j+j' is between 2 and 5;
R₁ to R₈ are halogen, H, C₁₋₆ (per)haloalkyl, C₁₋₆ alkyl, C₁₋₆ oxy(per)fluoroalkyl;
z is higher than or equal to 2, z' is an integer and the sum of z and z' is such that the number average molecular weight of the polymer of formula (I) is in the range 500-500000;
B' is (Ia) but at least one of R1 to R8 has a meaning different from that in B. This patent discloses block copolymers characterized by a linear backbone, without any branching. Indeed, no branching is obtained within B, notably comprising (per)fluoropolyether chains.

Polymers obtained using PFPE polymeric units have been disclosed in the art. Crossed-linked fluoroelastomers are among those. On this regard, S.P. Krukovsky et al. - J of Fluorine Chemistry 96 (1999) 31-33 - disclosed copolymerization of perfluoroalkyleneoxides containing peroxide groups in the chain with perfluorodivinyl ethers under UV radiation and heating to provide cross-linked polymers, referred to as elastomers. This document does not disclose any amount for the reactants, and does not address a method for manufacturing polymers suitable for use for lubricants.

### Summary of invention

While research and development in the recent years focused on mono- and/or bifunctional (per)fluoropolyether (PFPE) polymers, the Applicant perceived that there is still the need for providing neutral PFPE polymers that can be used as lubricants.

The Applicant faced the problem of providing new neutral PFPE polymers characterized by an increased viscosity (as measured by complex viscosity at 0.1 rad/s at 25°C), while maintaining low glass transition temperature (Tg) and still being in the liquid state at room temperature.

The Applicant surprisingly found that neutral branched (per)fluoropolyether polymers characterized by increased viscosity, due to an increase of the number average molecular weight, can be provided via a process easy to implement on industrial scale.

Advantageously, the process allows to manufacture neutral (per)fluoropolyether polymers having high thermal stability while maintaining a low glass transition temperature and a good viscosity index (ASTM D2270), such that such polymers are particularly useful as lubricants in harsh environments, including for example applications requiring wide range of working temperatures or high heat generation.

In a first aspect, the present invention relates to a block copolymer [copolymer (P)] comprising a first and a second (per)fluoropolyether chain [PFPE chain] each having two chain ends, wherein the first chain end of said first and second PFPE chain comprises a perfluorinated alkyl group and the second chain end of said first and second PFPE chain are bonded to each other via:
- a first block [block (1)] complying with formula (I): 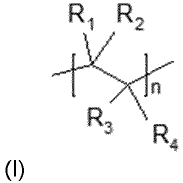 wherein
   n is 0 or an integer from 1 to 3;
   R₁ to R₄, each independently, is selected in the group comprising, preferably consisting of, fluorine atom, perfluorinated linear or branched alkyl group having from 1 to 6 carbon atoms, group of formula (II):

      (II) -(R₁₀)ₜ[C(R₁₁)(R₁₂)-C(R₁₃)(R₁₄)(R₁₅)]_{z}
   wherein
   R₁₀ is an oxygen atom, or a bi-/tri-/tetravalent perfluorinated alkyl chain comprising from 1 to 24 carbon atoms optionally interrupted by and/or comprising at least one oxygen atom,
   t is zero or 1,
   z is an integer from 1 to 3;
   R₁₁ to R₁₅, each independently, is selected in the group comprising, preferably consisting of, fluorine atom, perfluorinated linear or branched alkyl group having from 1 to 6 carbon atoms and group of formula (III):

      -[(A^)_{a^}-(B^)_{v^}-(E^)_{L^}]_{u^}-(C^)-T (III)
   wherein
   a^ is zero or 1,
   v^ is zero or an integer from 1 to 3,
   L^ is zero or an integer from 1 to 250,
   u^ is zero or an integer from 1 to 50;
   A^ is a PFPE chain
   B^ is a group of formula:

      -[C(R_{1^})(R_{2^})-C(R_{3^})(R_{4^})]-
   wherein R_{1^} to R_{4^} each independently has the meaning defined above for each of R₁ to R₄,
   E^ is a group of formula -(CR_{100^}R_{101^}CR_{102^}R_{103^})-
   wherein
   R_{100^} and R_{101^} are independently selected from halogen atom, more preferably fluorine or chlorine atom, and
   R_{102^} and R_{103^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms,
   optionally interrupted by one or more oxygen ether atoms; or
   one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
   C^ is a PFPE chain, and
   T is a perfluorinated alkyl group;
      and
- a second block [block (2)] complying with formula (IV):

   -[(CR^{1*}R^{2*}CR^{3*}R^{4*})_{n*}-(E)_{L}]- (IV)

   wherein
   n* is zero or an integer from 1 to 10,
   L is zero or an integer from 1 to 250;
   each of R^{1*} to R^{4*} is selected in the group comprising, preferably consisting of, fluorine atom, perfluorinated linear or branched alkyl group having from 1 to 6 carbon atoms, group of formula (II) as defined above,
   E has the same meaning provided for E^ above;
   with the proviso that:
      in said copolymer (P)
         -- the sum of (n + n* + v^) is from 1 to 15, preferably from 1 to 11, more preferably from 1 to 9;
         -- the sum of (L+L^) is from 1 to 500, preferably from 2 to 500, more preferably from 2 to 300,
         -- said block (1) and said block (2) are statistically distributed;
      in said formula (I):
         -- at least one of R₁ to R₄ is a group of formula (II),
         -- one of R₁₁ or R₁₂ and one of R₁₃ to R₁₅, is a group of formula (III);
      in said formula (III) and said formula (IV)
         -- the recurring units are statistically distributed,
      in said formula (III)
         -- when a is 1 at least one of v^ and L^ is different from 0, and
      in said formula (IV)
         -- at least one of n* and L is different from zero.

In a second aspect, the present invention relates to a process [process (P)] for the manufacture of copolymer (P) as defined above.

Advantageously, copolymer (P) according to the present invention is prepared via a process [process (P)], which comprises contacting:
- at least one (per)fluoropolyether polymer comprising peroxidic groups [PFPE peroxy];
- at least one perfluorinated compound of formula (X-p): 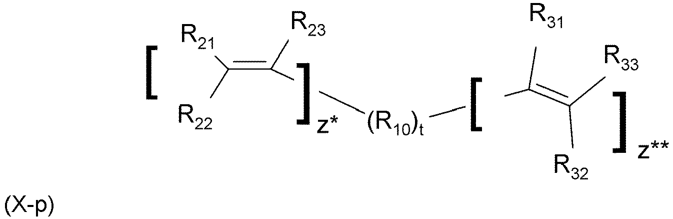 wherein
   each of R₂₁ to R₂₃ and R₃₁ to R₃₃ is independently fluorine atom, perfluorinated alkyl group having from 1 to 3 carbon atoms,
   R₁₀ is an oxygen atom, or a perfluorinated alkyl chain comprising from 2 to 18 carbon atoms, optionally and preferably interrupted by and/or comprising at least one oxygen atom,
   t is zero or 1, preferably 1;
   each of z* and z** is independently 1 or 2; and
- at least one compound [compound (O)] selected in the group comprising, preferably consisting of:
   (i) fully halogenated olefin comprising from 2 to 8 carbon atoms, preferably tetrafluoroethylene (TFE), hexafluoropropylene (HFP), chlorotrifluoroethylene (CTFE);
   (ii) CF₂=CFOR_{f},
      wherein
      R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or - CF₃ (MOVE3);
   (iii) perfluorodioxoles having formula : 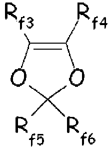
      wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃;
      in the presence of UV radiation or under heating,
      provided that the amount of the compound of formula (X-p) is less than 5 wt.% of the amount of the PFPE peroxy.

In the process according to the present invention, it is important that the amount of the compound of formula (X-p) is properly selected to be lower than the amount of the PFPE peroxy.

Advantageously, by selecting such amount, more than 85%, more preferably more than 90% and even more preferably more than 95% of the unsaturated moieties of compound of formula (III) react with at least one peroxy group of the starting PFPE peroxy, and branched block copolymers (P) free from unsaturated moieties as pendant groups (also referred to as "functional groups") are obtained.

Copolymer (P) is advantageously free from pendant groups comprising any moiety capable of undergoing a further chemical reaction. In particular, copolymer (P) is free from unsaturated moieties as pendant groups.

In a third aspect, the present invention relates to copolymer (P) obtained via process (P) as described above.

While purification steps can be performed at the end of said process (P), it will be clear to those skilled in the art that the copolymers (P) according to the present invention are obtained at the end of process (P) as a mixture.

Thus, in a further aspect, the present invention relates to a mixture [mixture (P)] comprising two or more copolymers (P) as defined above.

It will be clear to those skilled in the art that mixture (P) is obtained via process (P) as described above.

Advantageously, said mixture (P) can be subjected to one or more purification steps (also referred to as "fractionation" steps), thus obtaining separate copolymers (P) characterized by different viscosities.

### Description of embodiments

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural form, depending on the context;
- the term "(per)fluoropolyether" is intended to indicate fully or partially fluorinated polyether polymer.

### Copolymer (P)

Advantageously, said copolymer (P) is characterized by a complex viscosity, measured at 0.1 rad/s and at 25°C, from 10 Pa*s to 2000 Pa*s.

It will be understood by those skilled in the art that said first chain end of said first and second PFPE chain correspond to the two chain ends of copolymer (P).

Preferably, said first chain end of said first and second PFPE chain comprise a perfluorinated linear alkyl group having from 1 to 3 carbon atoms.

Preferably, said perfluorinated alkyl groups are the same from each other.

Preferably, said first chain end of said first and second PFPE chain and said T in formula (III), equal or different from each other, are a perfluorinated alkyl group having from 1 to 3 carbon atoms.

Preferably, said first and second PFPE chain, said A^ and said C^ are equal or different from each other.

Preferably, in copolymer (P), said first PFPE chain is bonded to said block (1) via a sigma bond or a group -(C)- selected from -CF₂-, -CF₂CF₂- or -O-.

Preferably, in copolymer (P), said block (2) is bonded to said second PFPE chain via a sigma bond or a group -(C)- selected from -CF₂-, -CF₂CF₂- or -O-.

Preferably, when both said block (1) and said block (2) are present, they are linked via a sigma bond.

Preferably, in said copolymer (P), each of said PFPE chain is a partially or fully fluorinated chain [chain (R_{f})] comprising, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃ and T being a C₁-C₃ perfluoroalkyl group.

Preferably, chain (R_{f}) complies with the following formula:

(R_{f}-I) -[(CFX¹O)_{g1}(CFX²CFX³O)_{g2}(CF₂CF₂CF₂O)_{g3}(CF₂CF₂CF₂CF₂O)_{g4}]-

-wherein
- X¹ is independently selected from -F and -CF₃,
- X², X³, equal or different from each other and at each occurrence, are independently -F, -CF₃, with the proviso that at least one of X is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

-wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;

   (R_{f}-IIB) -[(CF₂CF₂O)_{b1}(CF₂O)_{b2}(CF(CF₃)O)_{b3}(CF₂CF(CF₃)O)_{b4}]-

   wherein:
   b1, b2, b3, b4, are independently integers ≥ 0 such that the number average molecular weight is between 400 and 10,000, preferably between 400 and 5,000;
   preferably b1 is 0, b2, b3, b4 are > 0, with the ratio b4/(b2+b3) being ≥1;

      (R_{f}-IIC) -[(CF₂CF₂o)_{c1}(CF₂O)_{c2}(CF₂(CF₂)_{cw}CF₂O)_{c3}]-
   wherein:
   cw = 1 or 2;
   c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 10,000, preferably between 400 and 5,000, with the ratio a1/a2 being generally comprised between 0.1 and 10, more preferably between 0.2 and 5.

Preferably, in formula (I), at least one of substituents R₁ to R₄ is a group of formula (II) and the other substituents are each independently selected from a fluorine atom or a perfluorinated alkyl chain having from 1 to 3 carbon atoms, more preferably a fluorine atom or a perfluorinated alkyl chain having 1 carbon atoms.

According to one embodiment, in formula (II), t is 0.

According to another embodiment, in formula (II) t is 1 and R₁₀ complies with one of the following formulae:

(R₁₀-i) -(CF₂)_{d}(O)ₑ(CF₂O)ᵣR_{CF}(O)_{e*}(CF₂)_{d*}(CF2O)_{f}-

wherein
each of d, d*, e, e*, f and f* is independently zero or 1 and
R_{CF} is either a perfluoroalkyl chain comprising from 1 to 12, preferably from 1 to 8 carbon atoms, optionally interrupted by one or more oxygen atoms

   (R₁₀-ii) -O-(C₃F₆O)ₕ-(CF2)ᵢ-(OC₃F₆)ⱼ-O-
wherein h = j and h + j is from 2 to 6, and i is from 2 to 6.

According to this embodiment, preferably R₁₀ complies with formula:

(R₁₀-i) -(CF₂)_{d}(O)ₑ(CF₂O)_{f}R_{CF}(O)_{e*}(CF₂)_{d*}(CF2O)_{f*}

wherein
d, f, d* and f* are zero,
e and e* are 1, and
R_{CF} is a linear perfluoroalkyl chain comprising from 1 to 10, preferably from 1 to 8 carbon atoms.

Preferably, in formula (II), z is equal to 1 and R₁₀ is an oxygen atom or a bivalent perfluorinated alkyl chain comprising from 1 to 24 carbon atoms and being optionally interrupted by and/or comprising at least one oxygen atom.

Preferably, in formula (II), one of substituents R₁₁ and R₁₂ is a group of formula (III) and the other substituent is selected from a fluorine atom or a perfluorinated alkyl chain having from 1 to 3 carbon atoms, more preferably a fluorine atom or a perfluorinated alkyl chain having 1 to 3 carbon atoms. According to a preferred embodiment, one of substituents R₁₁ and R₁₂ is a group of formula (III) and the other substituent is a fluorine atoms.

Preferably, in formula (II), one of substituents R₁₃ to R₁₅ is a group of formula (III) and the other two substituents are independently selected from a fluorine atom or a perfluorinated alkyl chain having from 1 to 3 carbon atoms, more preferably a fluorine atom or a perfluorinated alkyl chain having 1 carbon atoms. More preferably said two substituents are the same and are a fluorine atom.

Preferably, in formula (III), v^ is an integer from 1 to 3, more preferably 1.

Preferably, in formula (III), L^ is an integer from 1 to 250, more preferably from 2 to 250.

Preferably, in formula (III), -(E^)_{L^}- complies with the following formula:

-(CR_{100^}R_{101^}CR_{102^}R_{103^} )_{l^}-(CR_{110^}R_{111^}CR_{112^}R_{113^})_{m^}-

wherein
l^ and m^ are each independently an integer from 1 to 250, more preferably from 2 to 250, such that the sum of L+m is from 2 to 250;
R_{100^} , R_{101^} , R_{110^} and R_{111^} are independently selected from halogen atom, more preferably fluorine or chlorine atom, and
R_{102^} , R_{103^} , R_{112^} and R_{113^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms; or
one of R_{110^} and R_{111^} and one of R_{112^} and R_{113^} are a fluorine atom and the other of R_{110^} and R_{111^} and the other of R_{112^} and R_{113^} together form a perhalogenated cyclic ring having from 4 to 6 members, optionally comprising heteroatoms, such as oxygen atoms;
with the proviso that -(CR_{100^}R_{101^}CR_{102^}R_{103^})_{l^}- and -(CR_{110^}R_{111^}CR_{112^}R_{113^})_{m^}-are different from each other and statistically distributed.

Preferably, in formula (IV), n* is an integer from 1 to 10, more preferably from 1 to 5, even more preferably from 1 to 3, and still more preferably 1.

Preferably, in formula (IV), L is an integer from 2 to 250.

Preferably, in formula (IV), -(E)_{L}- complies with the following formula:

-(CR₁₀₀R₁₀₁CR₁₀₂R₁₀₃)ₗ-(CR₁₁₀R₁₁₁CR₁₁₂R₁₁₃)ₘ-

wherein
l and m are each independently an integer from 1 to 250, more preferably from 2 to 250, such that the sum of L+m is from 2 to 250;
R₁₀₀ , R₁₀₁ , R₁₁₀ and R₁₁₁ are independently selected from halogen atom, more preferably fluorine or chlorine atom, and
R₁₀₂ , R₁₀₃ , R₁₁₂ and R₁₁₃ are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R₁₀₀ and R₁₀₁ and one of R₁₀₂ and R₁₀₃ are a fluorine atom and the other of R₁₀₀ and R₁₀₁ and the other of R₁₀₂ and R₁₀₃ together form a perhalogenated cyclic ring having from 4 to 6 members, optionally comprising heteroatoms, such as oxygen atoms; or
one of R₁₁₀ and R₁₁₁ and one of R₁₁₂ and R₁₁₃ are a fluorine atom and the other of R₁₁₀ and R₁₁₁ and the other of R₁₁₂ and R₁₁₃ together form a perhalogenated cyclic ring having from 4 to 6 members, optionally comprising heteroatoms, such as oxygen atoms;
**with the proviso that** -(CR₁₀₀R₁₀₁CR₁₀₂R₁₀₃)ₗ- and -(CR₁₁₀R₁₁₁CR₁₁₂R₁₁₃)ₘ- are different from each other and statistically distributed.

Preferably, in formula (IV), I is an integer from 1 to 250.

According to a first preferred embodiment, the copolymer (P) according to the present invention (hereinafter referred to as "copolymer (P-1)") is a block copolymer comprising a first and a second PFPE chain, each having two chain ends, wherein the first chain end of said first and second PFPE chain comprises a perfluorinated alkyl group and the second chain end of said first and second PFPE chain are bonded to each other via:
- a block complying with formula (IV):

   -[(CR^{1*}R^{2*}CR^{3*}R^{4*})_{n*}-(E)_{L}]- (IV)

   wherein
   n* is an integer from 1 to 10, preferably from 1 to 5, more preferably from 1 to 3, even more preferably 1;
   L is zero or an integer from 1 to 250, more preferably from 2 to 250;
   each of R^{1*} to R^{4*} is selected in the group comprising, preferably consisting of, fluorine atom, perfluorinated linear or branched alkyl group having from 1 to 3 carbon atoms, group of formula (II):

      (II) -(R₁₀)ₜ[C(R₁₁)(R₁₂)-C(R₁₃)(R₁₄)(R₁₅)]_{z}
   wherein
   R₁₀ is an oxygen atom, or a bi-/tri-/tetravalent perfluorinated alkyl chain comprising from 1 to 24 carbon atoms optionally interrupted by and/or comprising at least one oxygen atom,
   t is zero or 1,
   z is an integer from 1 to 3;
   R₁₁ to R₁₅, each independently, is selected in the group comprising, preferably consisting of, fluorine atom, perfluorinated linear or branched alkyl group having from 1 to 3 carbon atoms and group of formula (III):

      -[(A^)_{a^}-(B^)_{v^}-(E^)_{L^}]_{u^}-(C^)-T (III)
   wherein
   a^ is zero or 1,
   v^ is zero or an integer from 1 to 3,
   L^ is an integer from 1 to 250, preferably from 2 to 250,
   u^ is an integer from 1 to 50;
   A^ is a PFPE chain,
   B^ is a group of formula
   -[C(R_{1^})(R_{2^})-C(R_{3^})(R_{4^})]-
   wherein R_{1^} to R_{4^} each independently has the meaning defined above for each of R₁ to R₄,
   E^ is a group of formula -(CR_{100^}R_{101^}CR_{102^}R_{103^})-
   wherein
   R_{100^} and R_{101^} are independently selected from halogen atom, more preferably fluorine or chlorine atom, and
   R_{102^} and R_{103^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms,
   optionally interrupted by one or more oxygen ether atoms; or
   one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
   C^ is a PFPE chain, and
   T is a perfluorinated alkyl group;
   E has the same meaning provided for E^ above;
   with the proviso that
- in said copolymer (P-1):
   -- the sum of (n* + v^) is from 1 to 15,
   -- the sum of (L+L^) is from 2 to 500, preferably from 3 to 300, more preferably from 4 to 250, and
   -- the recurring units in formulae (III) and (IV) are statistically distributed;
      and
- in said formula (IV):
   -- at least one of R_{1^} to R_{4^} is a group of formula (II),
   -- one of R₁₁ or R₁₂ and one of R₁₃ to R₁₅, is a group of formula (III).

According to a second preferred embodiment, the copolymer (P) according to the present invention (hereinafter referred to as "copolymer (P-2)") is a block copolymer comprising a first and a second PFPE chain, each having two chain ends, wherein the first chain end of said first and second PFPE chain comprises a perfluorinated alkyl group and the second chain end of said first and second PFPE chain are bonded to each other via:
- a first block [block (1)] complying with formula (I): 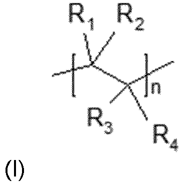 wherein
   n is an integer from 1 to 3;
   R₁ to R₄, each independently, is selected in the group comprising, preferably consisting of, fluorine atom, perfluorinated linear or branched alkyl group having from 1 to 6 carbon atoms, group of formula (II):

      (II) -(R₁₀)ₜ[C(R₁₁)(R₁₂)-C(R₁₃)(R₁₄)(R₁₅)]_{z}
   wherein
   R₁₀ is an oxygen atom, or a bi-/tri-/tetravalent perfluorinated alkyl chain comprising from 1 to 24 carbon atoms optionally interrupted by and/or comprising at least one oxygen atom,
   t is zero or 1,
   z is an integer from 1 to 3;
   R₁₁ to R₁₅, each independently, is selected in the group comprising, preferably consisting of, fluorine atom, perfluorinated linear or branched alkyl group having from 1 to 6 carbon atoms and group of formula (III):

      -[(A^)_{a^}-(B^)_{v^}-(E^)_{L^}]_{u^}-(C^)-T (III)
   wherein
   a^ is zero or 1,
   v^ is zero or an integer from 1 to 3,
   L^ is an integer from 1 to 250, preferably from 2 to 250,
   u^ is zero or an integer from 1 to 50;
   A^ is a PFPE chain,
   B^ is a group of formula

      -[C(R_{1^})(R_{2^})-C(R_{3^})(R_{4^})]-
   wherein R_{1^} to R_{4^} each independently has the meaning defined above for each of R₁ to R₄,
   E^ is a group of formula

      -(CR_{100^}R_{101^}CR_{102^}R_{103^})-
   wherein
   R_{100^} and R_{101^} are independently selected from halogen atom, more preferably fluorine or chlorine atom, and
   R_{102^} and R_{103^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
   one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
   C^ is a PFPE chain, and
   T is a perfluorinated alkyl group;
      and
- a second block [block (2)] complying with formula (IV):

   -[(CR^{1*}R^{2*}CR^{3*}R^{4*})_{n*}-(E)_{L*}]- (IV)

   wherein
   n* is 0 or an integer from 1 to 10, preferably from 1 to 5, more preferably from 1 to 3, even more preferably 0 or 1,
   L* is 0 or an integer from 1 to 250, more preferably from 2 to 250;
   each of R^{1*} to R^{4*} is selected in the group comprising, preferably consisting of, fluorine atom, perfluorinated linear or branched alkyl group having from 1 to 6 carbon atoms, group of formula (II) as defined above,
   E has the same meaning provided for E^ above;
   with the proviso that:
      in said copolymer (P-2):
         -- the sum of (n + n* + v) is from 1 to 15, preferably from 1 to 11, more preferably from 1 to 9;
         -- the sum of (L^+L*) is from 1 to 500, preferably from 2 to 500, more preferably from 3 to 300, and
         -- said block (1) and said block (2) are statistically distributed;
      in said formula (I):
         -- at least one of R₁ to R₄ is a group of formula (II),
         -- one of R₁₁ or R₁₂ and one of R₁₃ to R₁₅, is a group of formula (III); and
      in said formula (III) and said formula (IV), the recurring units are statistically distributed,
      in said formula (III)
         -- when a is 1 at least one of v^ and L^ is different from 0 and
      in said formula (IV)
         -- at least one of n* and L* is different from zero.

Preferably, in said copolymer (P-1) and in said copolymer (P-2), each of said (E) and (E^) is a group of formula:

-(CR₁₀₀R₁₀₁CR₁₀₂R₁₀₃)_{L}-(CR₁₁₀R₁₁₁CR₁₁₂R₁₁₃)ₘ-

wherein
L and m are each independently an integer from 1 to 250, more preferably from 2 to 250, such that the sum of L+m is from 2 to 250;
R₁₀₀, R₁₀₁ , R₁₁₀ and R₁₁₁ are independently selected from halogen atom, more preferably fluorine or chlorine atom, and
R₁₀₂ , R₁₀₃ , R₁₁₂ and R₁₁₃ are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula - CF₂OR₂₀₁ in which R₂₀₁ is a perfluorinated alkyl chain comprising from 1 to 6 carbon atoms, optionally interrupted by one or more oxygen ether atoms; or one of R₁₀₀ and R₁₀₁ and one of R₁₀₂ and R₁₀₃ are a fluorine atom and the other of R₁₀₀ and R₁₀₁ and the other of R₁₀₂ and R₁₀₃ together form a perhalogenated cyclic ring having from 4 to 6 members, optionally comprising heteroatoms, such as oxygen atoms; or
one of R₁₁₀ and R₁₁₁ and one of R₁₁₂ and R₁₁₃ are a fluorine atom and the other of R₁₁₀ and R₁₁₁ and the other of R₁₁₂ and R₁₁₃ together form a perhalogenated cyclic ring having from 4 to 6 members, optionally comprising heteroatoms, such as oxygen atoms;
with the proviso that -(CR₁₀₀R₁₀₁CR₁₀₂R₁₀₃)_{L}- and -(CR₁₁₀R₁₁₁CR₁₁₂R₁₁₃)ₘ- are different from each other and statistically distributed.

Copolymers (P) according to the present invention can be advantageously prepared via a process that can be easily scaled up.

Preferably, in the process (P) of the present invention, the amount of the compound of formula (X-p) is less than 3 wt.%, even more preferably less than 1 wt.%, of the amount of the PFPE peroxy.

Preferably, said PFPE peroxy is a peroxidic (per)fluoropolyether polymer comprising a (per)fluoropolyether chain having two chain ends, each of said chain ends comprising a (per)fluorinated alkyl chain having from 1 to 3 carbon atoms, optionally containing one or more chlorine atoms or functional end groups selected from acyl fluoride, fluoroformate and ketones, said chain ends being bonded to opposite sides of said (per)fluoropolyether chain, said (per)fluoropolyether chain comprising, preferably consisting of, repeating units being independently selected from the group consisting of formulae (Rf-i) to (Rf-v) as above defined and having a peroxidic content (PO), defined as grams of active oxygen (Mw = 16) in 100 g of PFPE peroxy between 0.1 and 4, preferably between 0.1 and 3.5.

The PFPE peroxy can be used as such or it can be subjected to partial reduction of the peroxid bonds, for example by chemical reduction or UV treatment or thermal treatment.

Preferably, in said compound of formula (X-p), when t is 1, the one, two, three or four unsaturated moieties are bonded to the same or different atoms, preferably carbon atoms, belonging to R₁₀.

Preferably, said at least one compound of formula (X-p) complies with the following formula:

CF₂=CF(R₁₀)ₜCF=CF₂

wherein t is zero or 1,
R₁₀ complies with one of the following formulae:

   (R₁₀-i) -(CF₂)_{d}(O)ₑ(CF₂O)ᵣR_{CF}(O)_{e*}(CF₂)_{d*}(CF2O)_{f*}
wherein
each of d, d*, e, e*, f and f* is independently zero or 1 and
R_{CF} is either a perfluoroalkyl chain comprising from 1 to 12, preferably from 1 to 8 carbon atoms, optionally interrupted by one or more oxygen atoms

   (R₁₀-ii) -O-(C₃F₆O)ₕ-(CF₂)ᵢ-(OC₃F₆)ⱼ-O-
wherein h = j and h + j is from 2 to 6, and i is from 2 to 6.

Preferably, said compound of formula (X-p) is selected from the group comprising, more preferably consisting of:

CF₂=CFCF=CF₂

CF₂=CFOCF=CF₂

CF₂=CFCF₂OCF₂CF=CF₂

CF₂=CFO-(CF₂)₃CF=CF₂

CF₂=CFCF₂O(CF₂)₃OCF₂-CF=CF₂

CF₂=CFCF₂CF=CF₂

CF₂=CF(CF₂)₂CF=CF₂

CF₂=CF(CF₂)₃CF=CF₂

CF₂=CF(CF₂)₄CF=CF₂

CF₂=CFOCF₂OCF=CF₂

CF₂=CFO(CF₂)₂OCF=CF₂

CF₂=CFO(CF₂)₃OCF=CF₂

CF₂=CFO(CF₂)₄OCF=CF₂

CF₂=CF(CF₂)₂OCF=CF₂

CF₂=CF(CF₂)₃OCF=CF₂

CF₂=CF(CF₂)₄OCF=CF₂

CF₂=CFCF₂O(CF₂)₂OCF₂O-CF=CF₂

CF₂=CFCF₂O(CF₂)₃OCF₂O-CF=CF₂

CF₂=CFCF₂O(CF₂)₄OCF₂OCF=CF₂

CF₂=CFCF₂O(CF₂)₆OCF₂CF=CF₂

CF₂=CFO-CF₂O-(CF₂)₂O-CF₂O-CF=CF₂

CF₂=CFO-CF₂O-(CF₂)₃O-CF₂O-CF=CF₂

CF₂=CFO-CF₂O-(CF₂)₄O-CF₂O-CF=CF₂

CF₂=CFO-(CF₂O)₆-CF=CF₂

CF₂=CFO-(CF₂CF₂O)₂-CF=CF₂

CF₂=CFO-(CF₂CF₂O)₂-CF₂OCF= CF₂

CF₂=CFO(C₃F₆O)ₕ-(CF₂)ᵢ-(OC₃F₆)-OCF=CF₂

wherein h and j are the same and
their sum is from 2 to 6 and i is from 2 to 6.

According to a particularly preferred embodiment, said at least one compound of formula (X-p) complies with the following formula:

CF₂=CF(R₁₀)ₜCF=CF₂

wherein t is 1 and
R₁₀ complies with formula:

   (R₁₀-i) -(CF₂)_{d}(O)ₑ(CF₂O)_{f}R_{CF}(O)_{e*}(CF₂)_{d*}(CF2O)_{f*}
wherein
d, f, d* and f* are zero,
e and e* are 1, and
R_{CF} is a linear perfluoroalkyl chain comprising from 1 to 10, preferably from 1 to 8 carbon atoms.

According to a preferred embodiment, process (P) of the invention is performed contacting said PFPE peroxy and said compound of formula (X-p) with at least two of said compounds (O).

Preferably, a first compound (O) is selected in the group comprising, preferably consisting of fully halogenated olefin comprising from 2 to 8 carbon atoms, such as tetrafluoroethylene (TFE), hexafluoropropylene (HFP), chlorotrifluoroethylene (CTFE). TFE and HFP being particularly preferred.

Preferably, a second compound (O) is selected in the group comprising, preferably consisting of:
(ii)

   CF₂=CFOR_{f},

   wherein
   R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or - CF₃ (MOVE3);
(iii) perfluorodioxoles having formula : 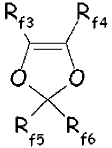 wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃. PAVE and MOVE under definition (i) being particularly preferred.

According to a first embodiment, said process [process (P1)] for the manufacture of copolymer (P1) as defined above, said process (P1) comprising the steps of:
a*) contacting at least one peroxidic (per)fluoropolyether pdymer [PFPE peroxy] with
   - at least one perfluorinated compound of formula (X-p): 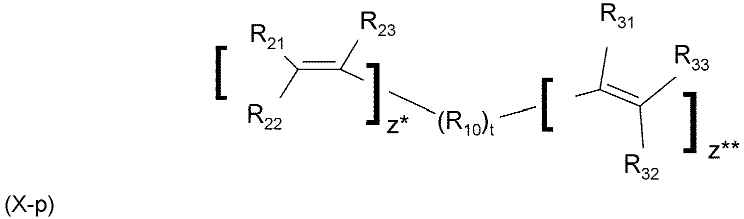 wherein
      each of R₂₁ to R₂₃ and R₃₁ to R₃₃ is independently fluorine atom, perfluorinated alkyl group having from 1 to 3 carbon atoms,
      R₁₀ is an oxygen atom, or a perfluorinated alkyl chain comprising from 2 to 18 carbon atoms, optionally and preferably interrupted by and/or comprising at least one oxygen atom,
      t is zero or 1, preferably 1;
      each of z* and z** is independently 1 or 2; and
   - at least one compound [compound (O)] selected in the group comprising, preferably consisting of:
      (i) fully halogenated olefin comprising from 2 to 8 carbon atoms, such as tetrafluoroethylene (TFE), hexafluoropropylene (HFP), chlorotrifluoroethylene (CTFE);
      (ii)

         CF₂=CFOR_{f},

         wherein
         R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or - CF₃ (MOVE3);
      (iii) perfluorodioxoles having formula : 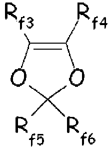
         wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃;
         wherein
         the amount of the compound of formula (X-p) is less than 5 wt.% of the amount of the PFPE peroxy;
b*) letting said PFPE peroxy, said compound of formula (X-p) and said at least one compound (O) react in the presence of UV radiation or heating;
c*) fluorinating, thus obtaining said copolymer (P1).

Preferably, said step (a*) comprises contacting said at least one PFPE peroxy with at least one compound of formula (X-p) and two of said compounds (O).

Preferably, a first compound (O) is selected in the group comprising, preferably consisting of fully halogenated olefin comprising from 2 to 8 carbon atoms, such as tetrafluoroethylene (TFE), hexafluoropropylene (HFP), chlorotrifluoroethylene (CTFE). TFE and HFP being particularly preferred.

Preferably, a second compound (O) is selected in the group comprising, preferably consisting of:
(ii)

   CF₂=CFOR_{f},

   wherein
   R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or - CF₃ (MOVE3);
(iii) perfluorodioxoles having formula : 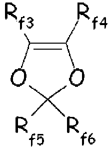 wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃. PAVE and MOVE under definition (i) being particularly preferred.

Step (a*) and step (b*) can be performed in the presence of a fluorinated solvent. Preferably said fluorinated solvent is selected in the group comprising: perfluorocarbons, hydrofluorocarbons, perfluoropolyethers, hydrofluoropolyethers.

Preferably, step (b*) is performed in the presence of UV radiation for a time from 2 to 60 hours.

Preferably, step (b*) is performed in the presence of UV radiation at a temperature from -60°C to +60°C, more preferably from -20°C to +40°C and even more preferably from 0°C to 30°C.

As an alternative, step (b*) can be performed under thermal treatment, preferably by heating at a temperature from 100 °C to 250 °C.

It will be clear to those skilled in the art that the polymer obtained at the end of step (b*) has a peroxide content (PO) lower than 0.05, preferably lower than 0.001.

Preferably, said step (c*) is performed by treating with fluorine in the presence of anhydrous nitrogen flow.

Preferably, said step (c*) is performed in the presence of UV radiation or under heating. Alternatively, said step (c*) can be performed as chemically assisted fluorination.

Preferably, said process (P1) comprises after step (c*), step (d*) of removal of the solvent and/or step (e*) of fractionation.

Said step (d*) of removal of the solvent can be carried out by evaporation, for example by distillation under vacuum.

Said step (e*) of fractionation can be performed via solvent extraction, using supercritical CO₂, hexafluoroxylene or hydrofluorocarbons as solvents, and mixtures thereof when the fractionation step is performed via precipitation fractionation. Supercritical CO₂ is preferred.

As explained above, although purification steps can be performed, it will be clear to those skilled in the art that at the end of process (P1), copolymers (P) according to the present invention are obtained in the form of mixtures comprising more then one copolymer (P) each characterized by different viscosities and/or molecular weight and/or substituents.

According to a second embodiment, the process [process (P2-a)] for the manufacture of copolymer (P2) comprises the steps of:
a') contacting at least one peroxidic (per)fluoropolyether polymer [PFPE peroxy] with at least one one compound (O) as defined above;
b') letting said PFPE peroxy and said compound (O) react in the presence of UV radiation or heating;
c') stopping said UV radiation or heating;
d') contacting the reaction mixture with at least one perfluorinated compound of formula (X-p): 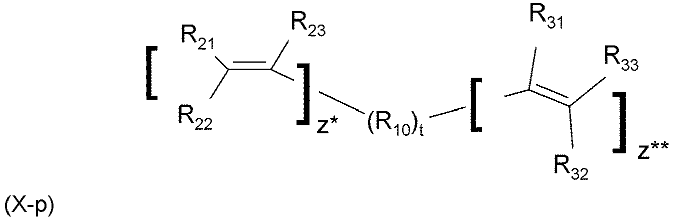 wherein
   each of R₂₁ to R₂₃ and R₃₁ to R₃₃ is independently fluorine atom, perfluorinated alkyl group having from 1 to 3 carbon atoms,
   R₁₀ is an oxygen atom, or a perfluorinated alkyl chain comprising from 2 to 18 carbon atoms, preferably interrupted by and/or comprising at least one oxygen atom,
   t is zero or 1, preferably 1;
   each of z* and z** is independently 1 or 2,
   wherein
   the amount of the compound of formula (X-p) is less than 5 wt.% of the amount of the PFPE peroxy;
e') letting the reaction proceed in the presence of UV radiation or heating; and
f') fluorinating, thus obtaining said copolymer (P2).

Preferably, said step (a') comprises contacting said at least one PFPE peroxy with at least two compounds (O).

Advantageously, a first compound (O) and a second compound (O) comply with the definition provided above.

Alternatively, the process [process (P2-b)] for the manufacture of copolymer (P2) comprises the steps of:
a") contacting at least one peroxidic (per)fluoropolyether polymer [PFPE peroxy] with at least one perfluorinated compound of formula (X-p): 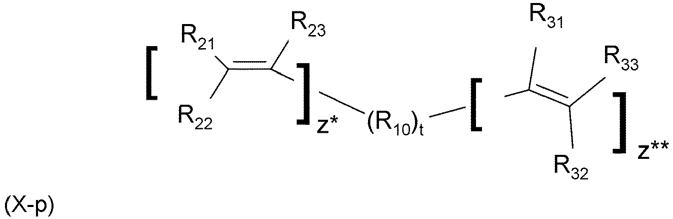 wherein
   each of R₂₁ to R₂₃ and R₃₁ to R₃₃ is independently fluorine atom, perfluorinated alkyl group having from 1 to 3 carbon atoms,
   R₁₀ is an oxygen atom, or a perfluorinated alkyl chain comprising from 2 to 18 carbon atoms, preferably interrupted by and/or comprising at least one oxygen atom,
   t is zero or 1, preferably 1;
   each of z* and z** is independently 1 or 2,
   wherein
   the amount of the compound of formula (X-p) is less than 5 wt.% of the amount of the PFPE peroxy;
b") letting said PFPE peroxy and said compound of formula (X-p) react in the presence of UV radiation or heating;
c") stopping said UV radiation or heating;
d") contacting the reaction mixture obtained in step c") with with at least one one compound (O) as defined above;
e") letting the reaction proceed in the presence of UV radiation or heating; and f") fluorinating, thus obtaining said copolymer (P2).

Preferably, said step (d") comprises contacting the reaction mixture obtained in step (c") with at least two compounds (O).

Advantageously, a first compound (O) and a second compound (O) comply with the definition provided above.

Steps (a') to (c') as well as steps (a") to (c") can be performed in the presence of a fluorinated solvent.

Preferably said fluorinated solvent is selected in the group comprising: perfluorocarbons, hydrofluorocarbons, perfluoropolyethers, hydrofluoropolyethers.

Preferably, step (b') and step (b") are each independently performed in the presence of UV radiation for a time from 2 to 60 hours.

Preferably, step (b') and step (b") are each independently performed in the presence of UV radiation at a temperature from -60°C to +60°C, more preferably from -20°C to +40°C and even more preferably from 0°C to 30°C.

As an alternative, step (b') and step (b") are each independently performed under thermal treatment, preferably by heating at a temperature from 100 °C to 250 °C.

It will be clear to those skilled in the art that the polymer obtained at the end of step (c') or step (c") has a peroxide content (PO) lower than 0.05, preferably lower than 0.001.

Preferably, said step (f') and step (f") are each performed by treating with fluorine in the presence of anhydrous nitrogen flow.

Preferably, said step (f') and step (f") are each performed in the presence of UV radiation or under heating. Alternatively, step (f') and step (f") are each performed as chemically assisted fluorination.

Preferably, said process (P2-a) and said process (P2-b) comprises after step (f') and (f"), respectively, step (g') and step (g") of removal of the solvent and/or step (h') and step (h") of fractionation.

Said step (g') or (g") of removal of the solvent can be carried out by evaporation, for example by distillation under vacuum.

Said step (h') or (h") of fractionation can be performed via solvent extraction, using supercritical CO₂, hexafluoroxylene or hydrofluorocarbons as solvents, and mixtures thereof when the fractionation step is performed via precipitation fractionation. Supercritical CO₂ is preferred.

As explained above, although purification steps can be performed, it will be clear to those skilled in the art that at the end of process (P), process (P1), process (P2-a) and process (P2-b) step (c) or of step (d) of process (P) as mixture (P), copolymers (P) according to the present invention are obtained in the form of mixtures comprising more then one copolymer (P) each characterized by different viscosities and/or molecular weight and/or substituents.

Copolymer (P) is advantageously used as a lubricant, notably for application in harsh environments, for example subjected to a wide range of working temperatures.

Copolymer (P) or mixture (P) can be used as such, or in admixture with additive(s) known to the person skilled in the art of lubrication, so that a composition [composition (CL)] is obtained.

For example, composition (CL) can comprise other suitable lubricants as base oil, such base oil being selected in the group comprising partially fluorinated, fully fluorinated and hydrogenated base oils, provided that said base oil is capable of forming a solution with copolymer (P).

Non-limiting examples of fully fluorinated lubricant base oils are those identified as compounds (1) - (8) EP 2100909 A (SOLVAY SOLEXIS S.p.A.).

For example, suitable additives are selected from thickening agents, anti rust agents, antioxidants, thermal stabilizers, pour-point depressants, anti-wear agents, including those for high pressures, dispersants, tracers, dyestuffs, talc and inorganic fillers.

Examples of thickening agents are talc, silica, boron nitride, polyureas, alkali or alkali-earth metals terephthalates, calcium and lithium soaps and complexes thereof and PTFE (polytetrafluoroethylene); among them, PTFE is preferred.

Examples of dispersants are, for example, surfactants, preferably non-ionic surfactants, more preferably (per)fluoropolyether surfactants and (per)fluoroalkyl surfactants.

If required by the application, solvents can also be used.

Examples of solvents are fluorinated or partially fluorinated solvents, such as Galden^{®} PFPEs, Novec^{®} HFEs and other organic solvents like fluoro-alkane, fluoro-aromatic compound, fluoroalkyl ether, fluoroalkyl amine, fluoro-alcohol, ketone such as methyl-ethyl-ketone, alcohol such as isopropyl alcohol, ester such as butyl acetate, hydrofluorocarbons, and the like.

Thus, in a further aspect, the present invention relates to a method for lubricating at least one surface of at least one article, said method comprising contacting said copolymer (P) or said mixture (P) with said at least one surface.

The article that can benefit from the lubricant properties of copolymer (P), mixture (P) or composition (CL) according to the present invention is not particularly limited.

Said article preferably comprises at least one metal surface.

Examples of said article are pumps for use in oil and gas applications, such as electrical submersible pump and the like, rotary machines, such as steam turbines and gas turbines; electrical connectors; bearings of fan clutches or cooling fans; or heavy duty truck automatic clutches, more particularly bearings of said clutches.

Copolymer (P), mixture (P) or composition (CL) according to the present invention can be advantageously used as damper fluids in a damping device.

Thus, in a further aspect, the present invention relates to a method for counteract vibrations and/or shocks in a device, said method comprising providing an apparatus comprising a damper device, said damper device comprising at least one copolymer (P), mixture (P) or composition (CL) as defined above.

Should the disclosure of any patents, patent applications, and publications which are incorporated herein by reference conflict with the description of the present application to the extent that it may render a term unclear, the present description shall take precedence.

The invention will be now described in connection with the following examples, whose purpose is merely illustrative and not intended to limit the scope of the invention.

### Experimental section

### Materials

Peroxidic perfluoropolyether oil having formula

T-O-(CF₂CF₂O)ₘ(CF₂O)ₙ-(O)ₕ-T'

number average molecular weight (Mₙ) = 48600 g/mol,
m/n = 1.0 and PO=1.65%
T, T' = -CF₃ (83%), -C(=O)F (6%), -CF₂C(=O)F (11%)
was obtained by Solvay Specialty Polymers Italy S.p.A..

Tetrafluoroethylene (TFE), perfluoro(methyl vinyl ether) (PMVE) and Galden^{®} HT200 were obtained by Solvay Specialty Polymers Italy S.p.A..

Perfluoro(bis vinyl ether) (PBVE) was obtained by Anles Ltd..

Hexafluorobenzene was obtained by Sigma Aldrich.

### Methods

### 19F-NMR spectroscopy:

Varian Mercury 200 MHz spectrometer working for the fluorine nucleus was used to obtain the structure, the number average molecular weight and the composition of the PFPE oils reported in the following examples. The ¹⁹F-NMR spectrum was obtained on pure samples using CFCl₃ as internal reference. Hexafluorobenzene was also used as a solvent.

### Determination of the peroxidic content (PO):

The peroxidic content (PO) is expressed as grams of peroxidic oxygen per 100 g of polymer. The analysis of the peroxide content was carried out by iodometric titration using a Mettler DL40 device equipped with platinum electrode. The sensitivity limit for the PO determination was 0.0002%.

### Determination of the complex viscosity:

The complex viscosity was measured with frequency sweep tests using an MCR502 Anton-Paar rheometer with parallel plate geometry (25mm diameter) according to ISO 6271 part 10.

### Gel permeation chromatography (GPC):

The analysis was performed with a Mixed CCD column with a Waters 410 refractometer detector using HFE7100 as eluent.

### Example 1 - Synthesis of copolymer (1)

The reaction was performed using a 1000mL cylindrical photochemical glass reactor equipped with a high-pressure mercury lamp (HANAU TQ150) enclosed in a quartz cylinder, a magnetic stirrer, a thermocouple and a condenser.

200.0 g of the starting peroxidic perfluoropolyether oil were charged in the photochemical reactor together with 1499 g of Galden^{®} HT200 and stirred thoroughly to obtain a homogenous mixture. The reaction mixture was then cooled down to about 10°C with an ice/water bath.

Two fluorinated olefins, PMVE and TFE, were introduced into the reactor, at a rate of 2.20 and 1.60 NI/h, respectively. After the flow started, the UV lamp was switched on. After 4 h, the UV lamp was switched off and 1.31 g of PBVE were added to the reactor. Under vigorous stirring and nitrogen, the UV lamp was switched on again.

After 51 hours of irradiation, the lamp was switched off and the reaction mixture was transferred into a second glass reactor and fluorinated at 40°C with 1.0 NI/h of fluorine gas for a total of 24 hours in the presence of UV radiation. ¹⁹F-NMR analysis confirmed the complete fluorination of the product and the absence of - CF₂COF and -COF terminals at the chain ends.

The obtained solution was distilled at 240°C for 4h in a round bottom flask equipped with a magnetic stirrer in order to remove the solvent.

The distillation was conducted first at atmospheric pressure, then under reduced pressure (0.1 mbar) until complete removal of the solvent.

203.4 g of copolymer (1) in the form of a clear viscous oil were obtained as residue, which was analyzed by iodometric titration to confirm the complete removal of the peroxide units.

¹⁹F-NMR analysis confirmed the absence of residual peroxide and the incorporation of TFE and PMVE at a concentration respectively of 10.2 and 10.1 weight %.

Copolymer (1) had m/n = 0.96, and the chain ends T, T'= -CF₃.

### Example 2 - Synthesis of copolymer (2)

The same photochemical apparatus and peroxidic perfluoropolyether precursor as Example 1 were adopted for this example.

200.8 g of the starting peroxidic perfluoropolyether oil were charged in the photochemical reactor together with 1494g of Galden HT200 and 1.35 g of PBVE and stirred thoroughly to obtain a homogenous mixture.

The reaction mixture was then cooled down to about 10°C by means of an ice/water bath. Two fluorinated olefins, PMVE and TFE, were introduced into the reactor, at a rate of 2.20 and 1.60 NI/h respectively. Immediately after the olefin flow started, the UV lamp was switched on. After 4 h, the olefins flow was interrupted and the reaction continued for 51 h under UV radiation.

The lamp was switched off and the reaction mixture was transferred into a second glass reactor to be fluorinated at 40°C with 1.0 NI/h of fluorine gas for a total of 24 hours in the presence of UV radiation.

¹⁹F-NMR analysis confirmed the complete fluorination of the product and absence of -COF, -CF₂COF terminals at the chain ends.

The obtained solution was distilled at 240°C for 4h in a round bottom flask equipped with a magnetic stirrer in order to remove the solvent. The distillation was conducted first at atmospheric pressure, then under reduced pressure (0.1 mbar) until complete removal of the solvent.

205.8 g of copolymer (2) in the form of a clear viscous oil were obtained as residue, which was analyzed by iodometric titration to confirm the complete removal of the peroxide units.

¹⁹F-NMR analysis confirmed the absence of residual peroxide and the incorporation of TFE and PMVE at a concentration respectively of 8.8 and 11.8 weight %.

Copolymer (2) had m/n = 0.99, T, T'= -CF₃.

### Example 3C - Synthesis of comparative polymer (C-1^) without PBVE

The same photochemical apparatus and peroxidic perfluoropolyether precursor as Example 1 were adopted for this comparative example.

200.4 g of the starting peroxidic perfluoropolyether oil were charged in the photochemical reactor together with 1502 g of Galden^{®} HT200 and stirred thoroughly to obtain a homogenous mixture.

The reaction proceeded as described in Example 2. The reaction mixture was then cooled down to about 10°C by means of an ice/water bath. Two fluorinated olefins, PMVE and TFE, were introduced into the reactor, at a rate of 2.20 and 1.60 NI/h respectively. Immediately after the olefin flow started, the UV lamp was switched on. After 4 h, the olefins flow was interrupted and the reaction continued for 51 h under UV radiation.

¹⁹F-NMR analysis confirmed the complete fluorination of the product and the absence of -CF₂COF and -COF terminals at the chain ends.

Distillation was also performed as described in Example 2.

206.3 g of comparative polymer (C-1^) in the form of a clear viscous oil were obtained as residue, which was analyzed by iodometric titration to confirm the complete removal of the peroxide units.

¹⁹F-NMR analysis confirmed the absence of residual peroxide. Comparative copolymer (C-1^) had m/n = 1.0 and T, T'= -CF₃.

**Table 1**

| | **Mw (g/mol)** | **Complex viscosity (at 0.1 rad/s and 25°C)** |
|---|---|---|
| **Copolymer (1)** | 126300 | 122.3 Pa*s |
| **Copolymer (2)** | 236600 | 460.0 Pa*s |
| **Comparative polymer (C-1^)** | 105000 | 20.5 Pa*s |

The increased molecular weight distribution and complex viscosity of copolymer (1) and (2) according to the present invention confirmed the chain extension with respect to the comparative polymer (C-1^).

## Claims

1. A block copolymer [copolymer (P)] comprising a first and a second (per)fluoropolyether chain [PFPE chain] each having two chain ends, wherein the first chain end of said first and second PFPE chain comprises a perfluorinated alkyl group and the second chain end of said first and second PFPE chain are bonded to each other via:
- a first block [block (1)] complying with formula (I): 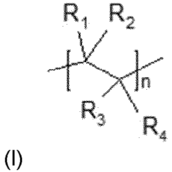 wherein
n is 0 or an integer from 1 to 3;
R₁ to R₄, each independently, is selected in the group comprising, preferably consisting of, fluorine atom, perfluorinated linear or branched alkyl group having from 1 to 6 carbon atoms, group of formula (II):
(II) -(R₁₀)ₜ[C(R₁₁)(R₁₂)-C(R₁₃)(R₁₄)(R₁₅)]_{z}
wherein
R₁₀ is an oxygen atom, or a bi-/tri-/tetravalent perfluorinated alkyl chain comprising from 1 to 24 carbon atoms optionally interrupted by and/or comprising at least one oxygen atom,
t is zero or 1,
z is an integer from 1 to 3;
R₁₁ to R₁₅, each independently, is selected in the group comprising, preferably consisting of, fluorine atom, perfluorinated linear or branched alkyl group having from 1 to 6 carbon atoms and group of formula (III):
-[(A^)_{a^}-(B^)_{v^}-(E^)_{L^}]_{u^}-(C^)-T (III)
wherein
a^ is zero or 1,
v^ is zero or an integer from 1 to 3,
L^ is zero or an integer from 1 to 250,
u^ is zero or an integer from 1 to 50;
A^ is a PFPE chain
B^ is a group of formula:
-[C(R_{1^})(R_{2^})-C(R_{3^})(R_{4^})]-
wherein R_{1^} to R_{4^} each independently has the meaning defined above for each of R₁ to R₄,
E^ is a group of formula -(CR_{100^}R_{101^}CR_{102^}R_{103^})-
wherein
R_{100^} and R_{101^} are independently selected from halogen atom, more preferably fluorine or chlorine atom, and
R_{102^} and R_{103^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
C^ is a PFPE chain, and
T is a perfluorinated alkyl group;
and
- a second block [block (2)] complying with formula (IV):
-[(CR^{1*}R^{2*}CR^{3*}R^{4*})_{n*}-(E)_{L}]- (IV)
wherein
n* is zero or an integer from 1 to 10,
L is zero or an integer from 1 to 250;
each of R^{1*} to R^{4*} is selected in the group comprising, preferably consisting of, fluorine atom, perfluorinated linear or branched alkyl group having from 1 to 6 carbon atoms, group of formula (II) as defined above,
E has the same meaning provided for E^ above;
with the proviso that:
- in said copolymer (P)
-- the sum of (n + n* + v^) is from 1 to 15, preferably from 1 to 11, more preferably from 1 to 9;
-- the sum of (L+L^) is from 1 to 500, preferably from 2 to 500, more preferably from 2 to 300,
-- said block (1) and said block (2) are statistically distributed;
- in said formula (I):
-- at least one of R₁ to R₄ is a group of formula (II),
-- one of R₁₁ or R₁₂ and one of R₁₃ to R₁₅, is a group of formula (III);
- in said formula (III) and said formula (IV)
-- the recurring units are statistically distributed,
- in said formula (III)
-- when a is 1 at least one of v^ and L^ is different from 0, and
- in said formula (IV)
-- at least one of n* and L is different from zero.

2. Copolymer (P) according to Claim 1, wherein:
- said first chain end of said first and second PFPE chain and said T in formula (III), equal or different from each other, are a perfluorinated alkyl group having from 1 to 3 carbon atoms; and/or
- said first and second PFPE chain, said A^ and said C^ are equal or different from each other; and/or
- said first PFPE chain is bonded to said block (1) via a sigma bond or a group - (C)- selected from -CF₂-, -CF₂CF₂- or -O-; and/or
- said block (2) is bonded to said second PFPE chain via a sigma bond or a group -(C)- selected from -CF₂-, -CF₂CF₂- or -O-; and/or
- each of said PFPE chain is a partially or fully fluorinated chain [chain (R_{f})] comprising, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃ and T being a C₁-C₃ perfluoroalkyl group.

3. Copolymer (P) according to Claim 1 or Claim 2, wherein in formula (II):
- t is 0; or
- t is 1 and R₁₀ complies with one of the following formulae:
(R₁₀-i) -(CF₂)_{d}(O)ₑ(CF₂O)_{f}R_{CF}(O)_{e*}(CF₂)_{d*}(CF2O)_{f*}
wherein
each of d, d*, e, e*, f and f* is independently zero or 1 and
R_{CF} is either a perfluoroalkyl chain comprising from 1 to 12, preferably from 1 to 8 carbon atoms, optionally interrupted by one or more oxygen atoms
(R₁₀-ii) -O-(C₃F₆O)ₕ-(CF₂)ᵢ-(OC₃F₆)ⱼ-O-
wherein h = j and h + j is from 2 to 6, and i is from 2 to 6.

4. Copolymer (P) according to any one of the preceding Claims, wherein in formula (II):
- z is equal to 1 and R₁₀ is an oxygen atom or a bivalent perfluorinated alkyl chain comprising from 1 to 24 carbon atoms optionally interrupted by and/or comprising at least one oxygen atom; and/or
- one of substituents R₁₁ and R₁₂ is a group of formula (III) and the other substituent is selected from a fluorine atom or a perfluorinated alkyl chain having from 1 to 3 carbon atoms, more preferably a fluorine atom or a perfluorinated alkyl chain having 1 carbon atoms; and/or
- one of substituents R₁₃ to R₁₅ is a group of formula (III) and the other two substituents are independently selected from a fluorine atom or a perfluorinated alkyl chain having from 1 to 3 carbon atoms, more preferably a fluorine atom or a perfluorinated alkyl chain having 1 carbon atoms.

5. Copolymer (P) according to any one of the preceding Claims, wherein:
- in formula (III), -(E^)_{L^}- complies with the following formula:
-(CR_{100^}R_{101^}CR_{102^}R_{103^})_{l^}-(CR_{110^}R_{111^}CR_{112^}R₁₁₃)_{m^}-
wherein
l^ and m^ are each independently an integer from 1 to 250, more preferably from 2 to 250, such that the sum of L+m is from 2 to 250;
R_{100^} , R_{101^} , R_{110^} and R_{111^} are independently selected from halogen atom, more preferably fluorine or chlorine atom, and
R_{102^} , R_{103^} , R_{112^} and R_{113^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms; or
one of R_{110^} and R_{111^} and one of R_{112^} and R_{113^} are a fluorine atom and the other of R_{110^} and R_{111^} and the other of R_{112^} and R_{113^} together form a perhalogenated cyclic ring having from 4 to 6 members, optionally comprising heteroatoms, such as oxygen atoms;
with the proviso that -(CR_{100^}R_{101^}CR_{102^}R_{103^})_{l^}- and -(CR_{110^}R_{111^}CR_{112^}R_{113^})_{m^}- are different from each other and statistically distributed; and/or
- in formula (IV), -(E)_{L}- complies with the following formula:
-(CR₁₀₀R₁₀₁CR₁₀₂R₁₀₃)ₗ-(CR₁₁₀R₁₁₁CR₁₁₂R₁₁₃)ₘ-
wherein
each of I, m, R₁₀₀ , R₁₀₁ , R₁₁₀, R₁₁₁ , R₁₀₂ , R₁₀₃ , R₁₁₂ and R₁₁₃ have the meanings defined above for l^, m^, R_{100^} , R_{101^} , R_{110^} , R_{111^}, R_{102^} , R_{103^} , R_{112^} and R_{113^} respectively.

6. Copolymer (P) according to any one of the preceding claims, said copolymer (P) being free from pendant groups comprising any moiety capable of undergoing a further chemical reaction, such as unsaturated moieties.

7. Copolymer (P) according to any one of the preceding claims, said copolymer (P) being a block copolymer [(P-1)] comprising a first and a second PFPE chain, each having two chain ends, wherein the first chain end of said first and second PFPE chain comprises a perfluorinated alkyl group and the second chain end of said first and second PFPE chain are bonded to each other via:
- a block complying with formula (IV):
-[(CR^{1*}R^{2*}CR^{3*}R^{4*})_{n*}-(E)_{L}]- (IV)
wherein
n* is an integer from 1 to 10, preferably from 1 to 5, more preferably from 1 to 3, even more preferably 1;
L is zero or an integer from 1 to 250, more preferably from 2 to 250;
each of R^{1*} to R^{4*} is selected in the group comprising, preferably consisting of, fluorine atom, perfluorinated linear or branched alkyl group having from 1 to 3 carbon atoms, group of formula (II):
(II) -(R₁₀)ₜ[C(R₁₁)(R₁₂)-C(R₁₃)(R₁₄)(R₁₅)]_{z}
wherein
R₁₀ is an oxygen atom, or a bi-/tri-/tetravalent perfluorinated alkyl chain comprising from 1 to 24 carbon atoms optionally interrupted by and/or comprising at least one oxygen atom,
t is zero or 1,
z is an integer from 1 to 3;
R₁₁ to R₁₅, each independently, is selected in the group comprising, preferably consisting of, fluorine atom, perfluorinated linear or branched alkyl group having from 1 to 3 carbon atoms and group of formula (III):
-[(A^)_{a^}-(B^)_{v^}-(E^)_{L^}]_{u^}-(C^)-T (III)
wherein
a^ is zero or 1,
v^ is zero or an integer from 1 to 3,
L^ is an integer from 1 to 250, preferably from 2 to 250,
u^ is an integer from 1 to 50;
A^ is a PFPE chain,
B^ is a group of formula
-[C(R_{1^})(R_{2^})-C(R_{3^})(R_{4^})]-
wherein R_{1^} to R_{4^} each independently has the meaning defined above for each of R₁ to R₄,
E^ is a group of formula -(CR_{100^}R_{101^}CR_{102^}R_{103^})-
wherein
R_{100^} and R_{101^} are independently selected from halogen atom, more preferably fluorine or chlorine atom, and
R_{102^} and R_{103^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
C^ is a PFPE chain, and
T is a perfluorinated alkyl group;
E has the same meaning provided for E^ above;
with the proviso that
- in said copolymer (P-1):
-- the sum of (n* + v^) is from 1 to 15,
-- the sum of (L+L^) is from 2 to 500, preferably from 3 to 300, more preferably from 4 to 250, and
-- the recurring units in formulae (III) and (IV) are statistically distributed;
and
- in said formula (IV):
-- at least one of R_{1^} to R_{4^} is a group of formula (II),
-- one of R₁₁ or R₁₂ and one of R₁₃ to R₁₅, is a group of formula (III).

8. Copolymer (P) according to any one of the preceding claims, said copolymer (P) being a block copolymer [(P-2)]comprising a first and a second PFPE chain, each having two chain ends, wherein the first chain end of said first and second PFPE chain comprises a perfluorinated alkyl group and the second chain end of said first and second PFPE chain are bonded to each other via:
- a first block [block (1)] complying with formula (I): 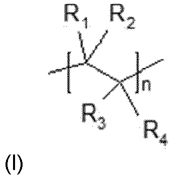 wherein
n is an integer from 1 to 3;
R₁ to R₄, each independently, is selected in the group comprising, preferably consisting of, fluorine atom, perfluorinated linear or branched alkyl group having from 1 to 6 carbon atoms, group of formula (II):
(II) -(R₁₀)ₜ[C(R₁₁)(R₁₂)-C(R₁₃)(R₁₄)(R₁₅)]_{z}
wherein
R₁₀ is an oxygen atom, or a bi-/tri-/tetravalent perfluorinated alkyl chain comprising from 1 to 24 carbon atoms optionally interrupted by and/or comprising at least one oxygen atom,
t is zero or 1,
z is an integer from 1 to 3;
R₁₁ to R₁₅, each independently, is selected in the group comprising, preferably consisting of, fluorine atom, perfluorinated linear or branched alkyl group having from 1 to 6 carbon atoms and group of formula (III):
-[(A^)_{a^}-(B^)_{v^}-(E^)_{L^}]_{u^-}(C^)-T (III)
wherein
a^ is zero or 1,
v^ is zero or an integer from 1 to 3,
L^ is an integer from 1 to 250, preferably from 2 to 250,
u^ is zero or an integer from 1 to 50;
A^ is a PFPE chain,
B^ is a group of formula
-[C(R_{1^})(R_{2^})-C(R_{3^})(R_{4^})]-
wherein R_{1^} to R_{4^} each independently has the meaning defined above for each of R₁ to R₄,
E^ is a group of formula
-(CR_{100^}R_{101^}CR_{102^}R_{103^})-
wherein
R_{100^} and R_{101^} are independently selected from halogen atom, more preferably fluorine or chlorine atom, and
R_{102^} and R_{103^} are independently selected from halogen atom, more preferably fluorine or chlorine atom; linear or branched alkyl chain comprising from 1 to 6 carbon atoms; -OR₂₀₀ wherein R₂₀₀ is linear or branched perfluorinated chain comprising from 1 to 6 carbon atoms or a group of formula -CF₂OR₂₀₁ in which R₂₀₁ is a perfluorinated alkyl chain comprising from 1 to 6 carbon atoms, optionally interrupted by one or more oxygen ether atoms; or
one of R_{100^} and R_{101^} and one of R_{102^} and R_{103^} are a fluorine atom and the other of R_{100^} and R_{101^} and the other of R_{102^} and R_{103^} together form a perhalogenated cyclic ring having from 4 to 6 members, optionally comprising heteroatoms, such as oxygen atoms;
C^ is a PFPE chain, and
T is a perfluorinated alkyl group;
and
- a second block [block (2)] complying with formula (IV):
-[(CR^{1*}R^{2*}CR^{3*}R^{4*})_{n*}-(E)_{L*}]- (IV)
wherein
n* is 0 or an integer from 1 to 10, preferably from 1 to 5, more preferably from 1 to 3, even more preferably 0 or 1,
L* is 0 or an integer from 1 to 250, more preferably from 2 to 250;
each of R^{1*} to R^{4*} is selected in the group comprising, preferably consisting of, fluorine atom, perfluorinated linear or branched alkyl group having from 1 to 6 carbon atoms, group of formula (II) as defined above,
E has the same meaning provided for E^ above;
with the proviso that:
- in said copolymer (P-2):
-- the sum of (n + n* + v) is from 1 to 15, preferably from 1 to 11, more preferably from 1 to 9;
-- the sum of (L^+L*) is from 1 to 500, preferably from 2 to 500, more preferably from 3 to 300, and
-- said block (1) and said block (2) are statistically distributed;
and
- in said formula (I):
- - at least one of R₁ to R₄ is a group of formula (II),
- - one of R₁₁ or R₁₂ and one of R₁₃ to R₁₅, is a group of formula (III); and
- in said formula (III) and said formula (IV), the recurring units are statistically distributed,
- in said formula (III)
-- when a is 1 at least one of v^ and L^ is different from 0 and
- in said formula (IV), at least one of n* and L* is different from zero.

9. A mixture [mixture (P)] comprising two or more copolymers (P) as defined in any one of Claims 1 to 8.

10. A process [process (P)] for the manufacturing of copolymer (P) as defined in anyone of Claims 1 to 8, said process (P) comprising at least one step of contacting:
- at least one (per)fluoropolyether polymer comprising peroxidic groups [PFPE peroxy];
- at least one perfluorinated compound of formula (X-p): 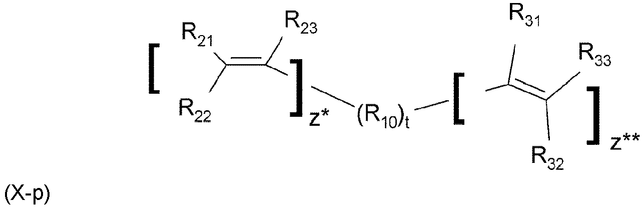 wherein
each of R₂₁ to R₂₃ and R₃₁ to R₃₃ is independently fluorine atom, perfluorinated alkyl group having from 1 to 3 carbon atoms,
R₁₀ is an oxygen atom, or a perfluorinated alkyl chain comprising from 2 to 18 carbon atoms, preferably interrupted by and/or comprising at least one oxygen atom,
t is zero or 1, preferably 1;
each of z* and z** is independently 1 or 2; and
- at least one compound [compound (O)] selected in the group comprising, preferably consisting of:
(i) fully halogenated olefin comprising from 2 to 8 carbon atoms, preferably tetrafluoroethylene (TFE), hexafluoropropylene (HFP), chlorotrifluoroethylene (CTFE);
(ii)
CF₂=CFOR_{f},
wherein
R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or -CF₃ (MOVE3);
(iii) perfluorodioxoles having formula : 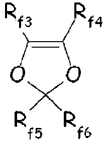
wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃;
in the presence of UV radiation or under heating,
provided that the amount of the compound of formula (X-p) is less than 5 wt.% of the amount of the PFPE peroxy.

11. The process (P) according to Claim 10, wherein said PFPE peroxy is a peroxidic (per)fluoropolyether polymer comprising a (per)fluoropolyether chain having two chain ends, each of said chain ends comprising a (per)fluorinated alkyl chain having from 1 to 3 carbon atoms, optionally containing one or more chlorine atoms or functional end groups selected from acyl fluoride, fluoroformate and ketones, said chain ends being bonded to opposite sides of said (per)fluoropolyether chain, said (per)fluoropolyether chain comprising, preferably consisting of, repeating units being independently selected from the group consisting of formulae (Rf-i) to (Rf-v) as above defined and having a peroxidic content (PO), defined as grams of active oxygen (Mw = 16) in 100 g of PFPE peroxy between 0.1 and 4, preferably between 0.1 and 3.5.

12. The process (P) according to Claims 10 or 11, wherein said at least one compound of formula (X-p) complies with the following formula:
CF₂=CF(R₁₀)ₜCF=CF₂
wherein
t is zero or 1,
R₁₀ complies with one of the following formulae:
(R₁₀-i) -(CF₂)_{d}(O)ₑ(CF₂O)_{f}R_{CF}(O)_{e*}(CF₂)_{d*}(CF2O)_{f*}
wherein
each of d, d*, e, e*, f and f* is independently zero or 1 and
R_{CF} is either a perfluoroalkyl chain comprising from 1 to 12, preferably from 1 to 8 carbon atoms, optionally interrupted by one or more oxygen atoms
(R₁₀-ii) -O-(C₃F₆O)ₕ-(CF₂)ᵢ-(OC₃F₆)ⱼ-O-
wherein h = j and h + j is from 2 to 6, and i is from 2 to 6.

13. The process (P) according to any one of Claims 10 to 12, wherein two of said compounds (O) are used.

14. The process (P) according to Claim 13, wherein
- a first compound (O) is selected in the group comprising, preferably consisting of fully halogenated olefin comprising from 2 to 8 carbon atoms, such as tetrafluoroethylene (TFE), hexafluoropropylene (HFP), chlorotrifluoroethylene (CTFE); and
- a second compound (O) is selected in the group comprising, preferably consisting of:
(ii)
CF₂=CFOR_{f},
wherein
R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or -CF₃ (MOVE3);
(iii) perfluorodioxoles having formula : 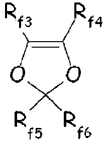 wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃. PAVE and MOVE under definition (i) being particularly preferred.

15. A process [process (P1)] for the manufacture of polymer (P-1) as defined in Claim 7, said process (P1) comprising the steps of:
a*) contacting at least one peroxidic (per)fluoropolyether polymer [PFPE peroxy] with
- at least one perfluorinated compound of formula (X-p): 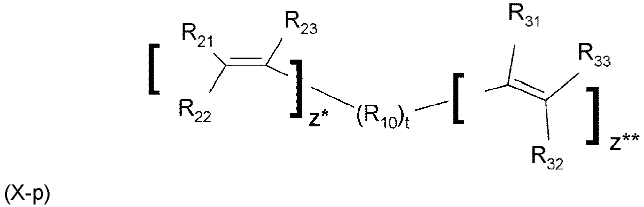 wherein
each of R₂₁ to R₂₃ and R₃₁ to R₃₃ is independently fluorine atom, perfluorinated alkyl group having from 1 to 3 carbon atoms,
R₁₀ is an oxygen atom, or a perfluorinated alkyl chain comprising from 2 to 18 carbon atoms, preferably interrupted by and/or comprising at least one oxygen atom,
t is zero or 1, preferably 1;
each of z* and z** is independently 1 or 2; and
- at least one compound [compound (O)] selected in the group comprising, preferably consisting of:
(i) fully halogenated olefin comprising from 2 to 8 carbon atoms, such as tetrafluoroethylene (TFE), hexafluoropropylene (HFP), chlorotrifluoroethylene (CTFE);
(ii)
CF₂=CFOR_{f},
wherein
R_{f} is a C₁-C₆ (per)fluoroalkyl group, preferably -CF₃, -C₂F₅, -C₃F₇ (also referred to as "PAVE" hereinafter); a group C₁-C₁₂ [(per)fluoro]-oxyalkyl comprising catenary oxygen atoms, preferably perfluoro-2-propoxypropyl group (also referred to as "perfluoro-oxy-alkyl-vinyl ethers" hereinafter); a group -CF₂OR_{f2} (also referred to as "perfluoro-methoxy-vinyl ethers" or "MOVE" hereinafter) wherein R_{f2} is selected from the group consisting of C₁-C₆ perfluoro-alkyls; C₅-C₆ cyclic perfluoro-alkyls, and C₂-C₆ perfluoro-oxy-alkyls, comprising at least one catenary oxygen atom, preferably R_{f2} is -CF₂CF₃ (MOVE1), -CF₂CF₂OCF₃ (MOVE2), or -CF₃ (MOVE3);
(iii) perfluorodioxoles having formula : 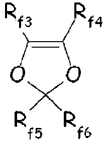
wherein each of R_{f3}, R_{f4}, R_{f5}, R_{f6}, equal to or different from each other, is independently selected from the group consisting of fluorine atom and C₁-C₆ perfluoroalkyl groups, optionally comprising one or more than one oxygen atom, such as notably -CF₃, -C₂F₅, -C₃F₇, -OCF₃, -OCF₂CF₂OCF₃;
wherein
the amount of the compound of formula (X-p) is less than 5 wt.% of the amount of the PFPE peroxy;
b*) letting said PFPE peroxy, said compound of formula (X-p) and said at least one compound (O) react in the presence of UV radiation or heating;
c*) fluorinating, thus obtaining said copolymer (P-1).

16. A process [process (P2-a)] for the manufacture of copolymer (P-2) as defined in Claim 8, said process (P2-a) comprising the steps of:
a') contacting at least one peroxidic (per)fluoropolyether polymer [PFPE peroxy] with at least one one compound (O) as defined above;
b') letting said PFPE peroxy and said compound (O) react in the presence of UV radiation or heating;
c') stopping said UV radiation or heating;
d') contacting the reaction mixture with at least one perfluorinated compound of formula (X-p): 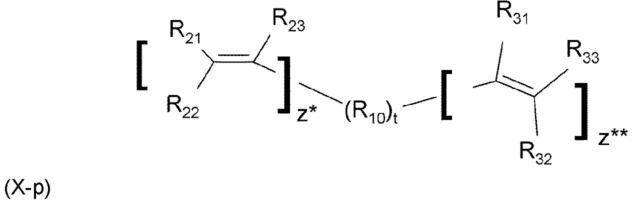 wherein
each of R₂₁ to R₂₃ and R₃₁ to R₃₃ is independently fluorine atom, perfluorinated alkyl group having from 1 to 3 carbon atoms,
R₁₀ is an oxygen atom, or a perfluorinated alkyl chain comprising from 2 to 18 carbon atoms, optionally interrupted by and/or comprising at least one oxygen atom,
t is zero or 1, preferably 1;
each of z* and z** is independently 1 or 2,
wherein
the amount of the compound of formula (X-p) is less than 5 wt.% of the amount of the PFPE peroxy;
e') letting the reaction proceed in the presence of UV radiation or heating; and
f') fluorinating, thus obtaining said copolymer (P2).

17. A process [process (P2-b)] for the manufacture of copolymer (P-2) as defined in Claim 8, wherein said process (P2-b) comprises the steps of:
a") contacting at least one peroxidic (per)fluoropolyether polymer [PFPE peroxy] with at least one perfluorinated compound of formula (X-p): 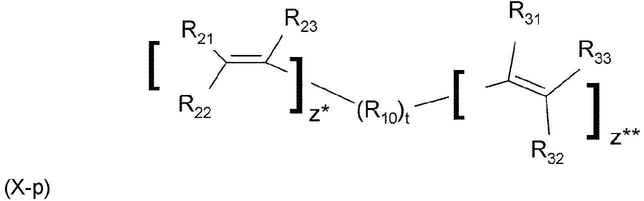 wherein
each of R₂₁ to R₂₃ and R₃₁ to R₃₃ is independently fluorine atom, perfluorinated alkyl group having from 1 to 3 carbon atoms,
R₁₀ is an oxygen atom, or a perfluorinated alkyl chain comprising from 2 to 18 carbon atoms, optionally interrupted by and/or comprising at least one oxygen atom,
t is zero or 1, preferably 1;
each of z* and z** is independently 1 or 2,
wherein
the amount of the compound of formula (X-p) is less than 5 wt.% of the amount of the PFPE peroxy;
b") letting said PFPE peroxy and said compound of formula (X-p) react in the presence of UV radiation or heating;
c") stopping said UV radiation or heating;
d") contacting the reaction mixture obtained in step c") with with at least one one compound (O) as defined above;
e") letting the reaction proceed in the presence of UV radiation or heating; and
f") fluorinating, thus obtaining said copolymer (P2).

18. A composition [composition (CL)] comprising at least one copolymer (P) as defined in any one of Claims 1 to 8 or mixture (P) as defined in Claim 9, at least one base oil selected in the group comprising partially fluorinated, fully fluorinated and hydrogenated base oils, provided that said base oil is capable of forming a solution with said copolymer (P), and optionally at least one additive selected from thickening agents, antirust agents, antioxidants, thermal stabilizers, pour-point depressants, anti-wear agents, including those for high pressures, dispersants, tracers, dyestuffs, talc and inorganic fillers.

19. A method for lubricating at least one surface of at least one article, said method comprising contacting at least one copolymer (P) as defined in Claims 1 to 8, or said mixture (P) as defined in Claim 9 or said composition (CL) as defined in Claim 18 with said at least one surface.

20. The method of Claim 19, wherein said article is selected from pumps for use in oil and gas applications, such as electrical submersible pump, rotary machines, such as steam turbines and gas turbines; electrical connectors; bearings of fan clutches or cooling fans; or heavy duty truck automatic clutches, more particularly bearings of said clutches.

21. A method for counteract vibrations and/or shocks in a device, said method comprising providing an apparatus comprising a damper device, said damper device comprising at least one copolymer (P) as defined in Claims 1 to 8, or said mixture (P) as defined in Claim 9 or said composition (CL) as defined in Claim 18.

## Patentansprüche

1. Blockcopolymer [Copolymer (P)], umfassend eine erste und eine zweite (Per)fluorpolyetherkette [PFPE-Kette] mit jeweils zwei Kettenenden, wobei das erste Kettenende der ersten und zweiten PFPE-Kette eine perfluorierte Alkylgruppe umfasst und das zweite Kettenende der ersten und zweiten PFPE-Kette über Folgendes aneinander gebunden sind:
- einen ersten Block [Block (1)], der der Formel (I) entspricht: 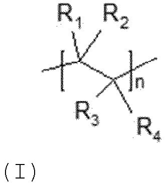 wobei
n für 0 oder eine ganze Zahl von 1 bis 3 steht;
R₁ bis R₄ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen, Gruppe der Formel (II):
(II) -(R₁₀)ₜ[C(R₁₁)(R₁₂)-C(R₁₃)(R₁₄)(R₁₅)]_{z}
wobei
R₁₀ für ein Sauerstoffatom oder eine zwei-/drei-/vierwertige perfluorierte Alkylkette mit 1 bis 24 Kohlenstoffatomen, die gegebenenfalls durch mindestens ein Sauerstoffatom unterbrochen ist und/oder mindestens ein Sauerstoffatom umfasst, steht,
t für null oder 1 steht,
z für eine ganze Zahl von 1 bis 3 steht;
R₁₁ bis R₁₅ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen und Gruppe der Formel (III):
-[(A^)_{a^}-(B^)_{v^}-(E^)_{L^}]_{u^}-(C^)-T (III)
wobei
a^ für null oder 1 steht,
v^ für null oder eine ganze Zahl von 1 bis 3 steht,
L^ für null oder eine ganze Zahl von 1 bis 250 steht,
u^ für null oder eine ganze Zahl von 1 bis 50 steht;
A^ für eine PFPE-Kette steht,
B^ für eine Gruppe der folgenden Formel steht:
-[C(R_{1^})(R_{2^})-C(R_{3^})(R_{4^})]-
wobei R_{1^} bis R_{4^} jeweils unabhängig die oben für jedes von R₁ bis R₄ definierte Bedeutung haben,
E^ für eine Gruppe der Formel -(CR_{100^}R_{101^}CR_{102^}R_{103^})-steht,
wobei
R_{100^} und R_{101^} unabhängig aus Halogenatom, weiter bevorzugt Fluor- oder Chloratom, ausgewählt sind und
R_{102^} und R_{103^} unabhängig ausgewählt sind aus Halogenatom, weiter bevorzugt Fluor- oder Chloratom; lineare oder verzweigte Alkylkette mit 1 bis 6 Kohlenstoffatomen; - OR₂₀₀, wobei R₂₀₀ für eine lineare oder verzweigte perfluorierte Kette mit 1 bis 6 Kohlenstoffatomen oder eine Gruppe der Formel -CF₂OR₂₀₁, in der R₂₀₁ für eine perfluorierte Alkylkette mit 1 bis 6 Kohlenstoffatomen, die gegebenenfalls durch ein oder mehrere Sauerstoffetheratome unterbrochen ist, steht, steht; oder
eines von R_{100^} und R_{101^} und eines von R_{102^} und R_{103^} für ein Fluoratom stehen und das andere von R_{100^} und R_{101^} und das andere von R_{102^} und R_{103^} zusammen einen perhalogenierten cyclischen Ring mit 4 bis 6 Gliedern, der gegebenenfalls Heteroatome, wie Sauerstoffatome, umfasst, bilden;
C^ für eine PFPE-Kette steht und
T für eine perfluorierte Alkylgruppe steht;
und
- einen zweiten Block [Block (2)], der der Formel (IV) entspricht:
-[(CR¹*R²*CR³*R⁴*)_{n*}-(E)_{L}]- (IV)
wobei
n* für null oder eine ganze Zahl von 1 bis 10 steht,
L für null oder eine ganze Zahl von 1 bis 250 steht;
R¹* bis R⁴* ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen, Gruppe der Formel (II) gemäß obiger Definition,
E die gleiche Bedeutung wie oben für E^ angegeben hat; mit der Maßgabe, dass:
- in dem Copolymer (P)
-- die Summe von (n + n* + v^) 1 bis 15, vorzugsweise 1 bis 11, weiter bevorzugt 1 bis 9, beträgt;
-- die Summe von (L+L^) 1 bis 500, vorzugsweise 2 bis 500, weiter bevorzugt 2 bis 300, beträgt,
-- der Block (1) und der Block (2) statistisch verteilt sind;
- in der Formel (I):
- - mindestens eines von R₁ bis R₄ für eine Gruppe der Formel (II) steht,
- - eines von R₁₁ oder R₁₂ und eines von R₁₃ bis R₁₅ für eine Gruppe der Formel (III) steht;
- in der Formel (III) und der Formel (IV)
-- die wiederkehrenden Einheiten statistisch verteilt sind,
- in der Formel (III)
-- dann, wenn a gleich 1 ist, mindestens eines von v^ und L^ von 0 verschieden ist, und
- in der Formel (IV)
-- mindestens eines von n* und L von null verschieden ist.

2. Copolymer (P) nach Anspruch 1, wobei:
- das erste Kettenende der ersten und zweiten PFPE-Kette und das T in Formel (III) gleich oder voneinander verschieden für eine perfluorierte Alkylgruppe mit 1 bis 3 Kohlenstoffatomen stehen; und/oder
- die erste und die zweite PFPE-Kette, das A^ und das C^ gleich oder voneinander verschieden sind; und/oder
- die erste PFPE-Kette über eine Sigma-Bindung oder eine Gruppe - (C) -, die aus -CF₂-, -CF₂CF₂- oder -O- ausgewählt ist, an den Block (1) gebunden ist; und/oder
- der Block (2) über eine Sigma-Bindung oder eine Gruppe
- (C) -, die aus -CF₂-, -CF₂CF₂- oder -O- ausgewählt ist, an die zweite PFPE-Kette gebunden ist; und/oder
- jede der PFPE-Ketten eine teil- oder vollfluorierte Kette [Kette (R_{f})] ist, die Wiederholungseinheiten R° umfasst und vorzugsweise daraus besteht, wobei die Wiederholungseinheiten unabhängig aus der Gruppe ausgewählt sind, die aus Folgendem besteht:
(i) -CFXO-, wobei X für F oder CF₃ steht;
(ii) -CFXCFXO-, wobei X bei jedem Auftreten gleich oder verschieden ist und für F oder CF₃ steht, mit der Maßgabe, dass mindestens eines von X für -F steht;
(iii) -CF₂CF₂CW₂O-, wobei W jeweils gleich oder voneinander verschieden ist und für F, Cl oder H steht;
(iv) -CF₂CF₂CF₂CF₂O-;
(v) -(CF₂)ⱼ-CFZ-O-, wobei j für eine ganze Zahl von 0 bis 3 steht und Z für eine Gruppe der allgemeinen Formel -O-R_{(f-a)}-T steht, wobei R_{(f-a)} für eine Fluorpolyoxyalkenkette mit einer Zahl von wiederkehrenden Einheiten von 0 bis 10 steht, wobei die wiederkehrenden Einheiten aus den Folgenden ausgewählt sind: -CFXO-, -CF₂CFXO-, -CF₂CF₂CF₂O-, -CF₂CF₂CF₂CF₂O-, wobei X jeweils unabhängig für F oder CF₃ steht und T für eine C₁-C₃-Perfluoralkylgruppe steht.

3. Copolymer (P) nach Anspruch 1 oder Anspruch 2, wobei in Formel (II):
- t für 0 steht; oder
- t für 1 steht und R₁₀ einer der folgenden Formeln entspricht:
(R₁₀-i) -(CF₂)_{d}(O)ₑ(CF₂₀)_{f}Rc_{F}(O)_{e*}(CF₂)_{d*}(CF20)_{f*}
wobei
d, d*, e, e*, f und f* jeweils unabhängig für null oder 1 stehen und
R_{CF} entweder für eine Perfluoralkylkette mit 1 bis 12 und vorzugsweise 1 bis 8 Kohlenstoffatomen, die gegebenenfalls durch ein oder mehrere Sauerstoffatome unterbrochen ist, steht,
(R₁₀-ii) -O-(C₃F₆O)ₕ-(CF₂)ᵢ-(OC₃F₆)ⱼ-O-
wobei h = j und h + j gleich 2 bis 6 ist und i für 2 bis 6 steht.

4. Copolymer (P) nach einem der vorhergehenden Ansprüche, wobei in Formel (II):
- z = 1 ist und R₁₀ für ein Sauerstoffatom oder eine zweiwertige perfluorierte Alkylkette mit 1 bis 24 Kohlenstoffatomen, die gegebenenfalls durch mindestens ein Sauerstoffatom unterbrochen ist und/oder mindestens ein Sauerstoffatom umfasst, steht; und/oder
- einer der Substituenten R₁₁ und R₁₂ für eine Gruppe der Formel (III) steht und der andere Substituent aus einem Fluoratom oder einer perfluorierten Alkylkette mit 1 bis 3 Kohlenstoffatomen, weiter bevorzugt einem Fluoratom oder einer perfluorierten Alkylkette mit 1 Kohlenstoffatomen, ausgewählt ist; und/oder
- einer der Substituenten R₁₃ bis R₁₅ für eine Gruppe der Formel (III) steht und die anderen beiden Substituenten unabhängig aus einem Fluoratom oder einer perfluorierten Alkylkette mit 1 bis 3 Kohlenstoffatomen, weiter bevorzugt einem Fluoratom oder einer perfluorierten Alkylkette mit 1 Kohlenstoffatomen, ausgewählt sind.

5. Copolymer (P) nach einem der vorhergehenden Ansprüche, wobei
- in Formel (III) -(E^)_{L^}- der folgenden Formel entspricht:
-(CR_{100^}R_{101^}CR_{102^}R_{103^})_{1^}-(CR_{100^}R_{111^}CR_{112^}R_{113^})_{m^}-
wobei
l^ und m^ jeweils unabhängig für eine ganze Zahl von 1 bis 250, weiter bevorzugt von 2 bis 250, stehen, derart, dass die Summe von L+m von 2 bis 250 beträgt;
R_{100^}, R_{101^}, R_{110^} und R_{111^} unabhängig voneinander aus Halogenatom, besonders bevorzugt Fluor- oder Chloratom, ausgewählt sind und
R_{102^}, R_{103^}, R_{112^} und R_{113^} unabhängig ausgewählt sind aus Halogenatom, weiter bevorzugt Fluor- oder Chloratom; lineare oder verzweigte Alkylkette mit 1 bis 6 Kohlenstoffatomen; -OR₂₀₀, wobei R₂₀₀ für eine lineare oder verzweigte perfluorierte Kette mit 1 bis 6 Kohlenstoffatomen oder eine Gruppe der Formel -CF₂OR₂₀₁, in der R₂₀₁ für eine perfluorierte Alkylkette mit 1 bis 6 Kohlenstoffatomen, die gegebenenfalls durch ein oder mehrere Sauerstoffetheratome unterbrochen ist, steht, steht; oder
eines von R_{100^} und R_{101^} und eines von R_{102^} und R_{103^} für ein Fluoratom stehen und das andere von R_{100^} und R_{101^} und das andere von R_{102^} und R_{103^} zusammen einen perhalogenierten cyclischen Ring mit 4 bis 6 Gliedern, der gegebenenfalls Heteroatome, wie Sauerstoffatome, umfasst, bilden; oder
eines von R_{110^} und R_{111^} und eines von R_{112^} und R_{113^} für ein Fluoratom stehen und das andere von R_{110^} und R_{111^} und das andere von R_{112^} und R_{113^} zusammen einen perhalogenierten cyclischen Ring mit 4 bis 6 Gliedern, der gegebenenfalls Heteroatome, wie Sauerstoffatome, umfasst, bilden;
mit der Maßgabe, dass -(CR_{100^}R_{101^}CR_{102^}R_{103^})_{l^}- und - (CR_{100^}R_{111^}CR_{112^}R_{113^})_{m^}- voneinander verschieden sind und statistisch verteilt sind; und/oder
- in Formel (IV), -(E)_{L}- der folgenden Formel entspricht:
-(CR₁₀₀R₁₀₁CR₁₀₂R₁₀₃)ₗ-(CR₁₁₀R₁₁₁CR₁₁₂R₁₁₃)ₘ-
wobei
l, m, R₁₀₀, R_{101,} R₁₁₀, R₁₁₁, R₁₀₂, R₁₀₃, R₁₁₂ und R₁₁₃ jeweils die oben für l^, m^, R_{100^}, R_{101^}, R_{110^}, R_{111^}, R_{102^}, R_{103^}, R_{112^} bzw. R_{113^} angegebenen Bedeutungen haben.

6. Copolymer (P) nach einem der vorhergehenden Ansprüche, wobei das Copolymer (P) frei von Seitengruppen ist, die eine Gruppierung umfassen, die in der Lage ist, eine weitere chemische Reaktion einzugehen, wie ungesättigte Gruppierungen.

7. Copolymer (P) nach einem der vorhergehenden Ansprüche, wobei es sich bei dem Copolymer (P) um ein Blockcopolymer [(P-1)] handelt, das eine erste und eine zweite PFPE-Kette mit jeweils zwei Kettenenden umfasst, wobei das erste Kettenende der ersten und zweiten PFPE-Kette eine perfluorierte Alkylgruppe umfasst und das zweite Kettenende der ersten und zweiten PFPE-Kette über Folgendes aneinander gebunden sind:
- einen Block, der Formel (IV) entspricht:
-[(CR¹*R²*CR³*R⁴*) ₙ*-(E)_{L}]- (IV)
wobei
n* für eine ganze Zahl von 1 bis 10, vorzugsweise von 1 bis 5, weiter bevorzugt von 1 bis 3, noch weiter bevorzugt 1, steht;
L für null oder eine ganze Zahl von 1 bis 250, weiter bevorzugt von 2 bis 250, steht;
R¹* bis R⁴* ausgewählt ist aus der Gruppe, die Folgendes umfasst und vorzugsweise daraus besteht: Fluoratom, perfluorierte lineare oder verzweigte Alkylgruppe mit 1 bis 3 Kohlenstoffatomen, Gruppe der Formel (II):
(II) - (R₁₀)ₜ[C(R₁₁)(R₁₂)-C(R₁₃)(R₁₄)(R₁₅)]_{z}
wobei
R₁₀ für ein Sauerstoffatom oder eine zwei-/drei-/vierwertige perfluorierte Alkylkette mit 1 bis 24 Kohlenstoffatomen, die gegebenenfalls durch mindestens ein Sauerstoffatom unterbrochen ist und/oder mindestens ein Sauerstoffatom umfasst, steht,
t für null oder 1 steht,
z für eine ganze Zahl von 1 bis 3 steht;
R₁₁ bis R₁₅ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 3 Kohlenstoffatomen und Gruppe der Formel (III):
-[(A^)_{a^}-(B^)_{v^}-(E^)_{L^}]_{u^}-(C^)-T (III)
wobei
a^ für null oder 1 steht,
v^ für null oder eine ganze Zahl von 1 bis 3 steht,
L^ für eine ganze Zahl von 1 bis 250, vorzugsweise von 2 bis 250, steht,
u^ für eine ganze Zahl von 1 bis 50 steht;
A^ für eine PFPE-Kette steht,
B^ für eine Gruppe der folgenden Formel steht:
-[C(R_{1^})(R_{2^})-C(R_{3^})(R_{4^})]-
wobei R_{1^} bis R_{4^} jeweils unabhängig die oben für jedes von R₁ bis R₄ definierte Bedeutung haben,
E^ für eine Gruppe der Formel -(CR_{100^}R_{101^}CR_{102^}R_{103^})-steht,
wobei
R_{100^} und R_{101^} unabhängig aus Halogenatom, weiter bevorzugt Fluor- oder Chloratom, ausgewählt sind und
R_{102^} und R_{103^} unabhängig ausgewählt sind aus Halogenatom, weiter bevorzugt Fluor- oder Chloratom; lineare oder verzweigte Alkylkette mit 1 bis 6 Kohlenstoffatomen; - OR₂₀₀, wobei R₂₀₀ für eine lineare oder verzweigte perfluorierte Kette mit 1 bis 6 Kohlenstoffatomen oder eine Gruppe der Formel -CF₂OR₂₀₁, in der R₂₀₁ für eine perfluorierte Alkylkette mit 1 bis 6 Kohlenstoffatomen, die gegebenenfalls durch ein oder mehrere Sauerstoffetheratome unterbrochen ist, steht, steht; oder
eines von R_{100^} und R_{101^} und eines von R_{102^} und R_{103^} für ein Fluoratom stehen und das andere von R_{100^} und R_{101^} und das andere von R_{102^} und R_{103^} zusammen einen perhalogenierten cyclischen Ring mit 4 bis 6 Gliedern, der gegebenenfalls Heteroatome, wie Sauerstoffatome, umfasst, bilden;
C^ für eine PFPE-Kette steht und
T für eine perfluorierte Alkylgruppe steht;
E die gleiche Bedeutung wie oben für E^ angegeben hat; mit der Maßgabe, dass
- in dem Copolymer (P-1):
-- die Summe von (n* + v^) 1 bis 15 beträgt,
-- die Summe von (L+L^) 2 bis 500, vorzugsweise 3 bis 300, weiter bevorzugt 4 bis 250, beträgt und
-- die wiederkehrenden Einheiten in den Formeln (III) und (IV) statistisch verteilt sind;
und
- in der Formel (IV):
-- mindestens eines von R_{1^} bis R_{4^} für eine Gruppe der Formel (II) steht,
-- eines von R₁₁ oder R₁₂ und eines von R₁₃ bis R₁₅ für eine Gruppe der Formel (III) steht.

8. Copolymer (P) nach einem der vorhergehenden Ansprüche, wobei es sich bei dem Copolymer (P) um ein Blockcopolymer [(P-2)] handelt, das eine erste und eine zweite PFPE-Kette mit jeweils zwei Kettenenden umfasst, wobei das erste Kettenende der ersten und zweiten PFPE-Kette eine perfluorierte Alkylgruppe umfasst und das zweite Kettenende der ersten und zweiten PFPE-Kette über Folgendes aneinander gebunden sind:
- einen ersten Block [Block (1)], der der Formel (I) entspricht: 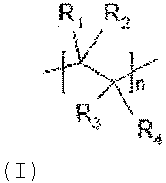 wobei
n für eine ganze Zahl von 1 bis 3 steht;
R₁ bis R₄ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen, Gruppe der Formel (II):
(II) -(R₁₀)ₜ[C(R₁₁)(R₁₂)-C(R₁₃)(R₁₄)(R₁₅)]_{z}
wobei
R₁₀ für ein Sauerstoffatom oder eine zwei-/drei-/vierwertige perfluorierte Alkylkette mit 1 bis 24 Kohlenstoffatomen, die gegebenenfalls durch mindestens ein Sauerstoffatom unterbrochen ist und/oder mindestens ein Sauerstoffatom umfasst, steht,
t für null oder 1 steht,
z für eine ganze Zahl von 1 bis 3 steht;
R₁₁ bis R₁₅ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen und Gruppe der Formel (III):
-[(A^)_{a^}-(B^)_{v^}-(E^)_{L^}]_{u^}-(C^)-T (III)
wobei
a^ für null oder 1 steht,
v^ für null oder eine ganze Zahl von 1 bis 3 steht,
L^ für eine ganze Zahl von 1 bis 250, vorzugsweise von 2 bis 250, steht,
u^ für null oder eine ganze Zahl von 1 bis 50 steht;
A^ für eine PFPE-Kette steht,
B^ für eine Gruppe der folgenden Formel steht:
-[C(R_{1^})(R_{2^})-C(R_{3^})(R_{4^})]-
wobei R_{1^} bis R_{4^} jeweils unabhängig die oben für jedes von R₁ bis R₄ definierte Bedeutung haben,
E^ für eine Gruppe der folgenden Formel steht:
-(CR_{100^}R_{101^}CR_{102^}R_{103^})-
wobei
R_{100^} und R_{101^} unabhängig aus Halogenatom, weiter bevorzugt Fluor- oder Chloratom, ausgewählt sind und
R_{102^} und R_{103^} unabhängig ausgewählt sind aus Halogenatom, weiter bevorzugt Fluor- oder Chloratom; lineare oder verzweigte Alkylkette mit 1 bis 6 Kohlenstoffatomen; - OR₂₀₀, wobei R₂₀₀ für eine lineare oder verzweigte perfluorierte Kette mit 1 bis 6 Kohlenstoffatomen oder eine Gruppe der Formel -CF₂OR₂₀₁, in der R₂₀₁ für eine perfluorierte Alkylkette mit 1 bis 6 Kohlenstoffatomen, die gegebenenfalls durch ein oder mehrere Sauerstoffetheratome unterbrochen ist, steht, steht; oder
eines von R_{100^} und R_{101^} und eines von R_{102^} und R_{103^} für ein Fluoratom stehen und das andere von R_{100^} und R_{101^} und das andere von R_{102^} und R_{103^} zusammen einen perhalogenierten cyclischen Ring mit 4 bis 6 Gliedern, der gegebenenfalls Heteroatome, wie Sauerstoffatome, umfasst, bilden;
C^ für eine PFPE-Kette steht und
T für eine perfluorierte Alkylgruppe steht;
und
- einen zweiten Block [Block (2)], der der Formel (IV) entspricht:
-[(CR¹*R²*CR³*R⁴*)_{n*}- (E)_{L*}]- (IV)
wobei
n* für 0 oder eine ganze Zahl von 1 bis 10, vorzugsweise von 1 bis 5, weiter bevorzugt von 1 bis 3, noch weiter bevorzugt 0 oder 1, steht;
L* für 0 oder eine ganze Zahl von 1 bis 250, weiter bevorzugt von 2 bis 250, steht;
R¹* bis R⁴* ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen, Gruppe der Formel (II) gemäß obiger Definition,
E die gleiche Bedeutung wie oben für E^ angegeben hat; mit der Maßgabe, dass:
- in dem Copolymer (P-2):
-- die Summe von (n + n* + v) 1 bis 15, vorzugsweise 1 bis 11, weiter bevorzugt 1 bis 9, beträgt;
-- die Summe von (L^+L*) 1 bis 500, vorzugsweise 2 bis 500, weiter bevorzugt 3 bis 300, beträgt und
-- der Block (1) und der Block (2) statistisch verteilt sind;
und
- in der Formel (I):
- - mindestens eines von R₁ bis R₄ für eine Gruppe der Formel (II) steht,
- - eines von R₁₁ oder R₁₂ und eines von R₁₃ bis R₁₅ für eine Gruppe der Formel (III) steht; und
- in der Formel (III) und der Formel (IV) die wiederkehrenden Einheiten statistisch verteilt sind,
- in der Formel (III)
-- dann, wenn a gleich 1 ist, mindestens eines von v^ und L^ von 0 verschieden ist, und
- in der Formel (IV) mindestens eines von n* und L* von null verschieden ist.

9. Mischung [Mischung (P)], umfassend zwei oder mehr Copolymere (P) gemäß einem der Ansprüche 1 bis 8.

10. Verfahren [Verfahren (P)] zur Herstellung von Copolymer (P) gemäß einem der Ansprüche 1 bis 8, wobei das Verfahren (P) mindestens einen Schritt des Inkontaktbringens von:
- mindestens einem (Per)fluorpolyetherpolymer mit peroxidischen Gruppen [PFPE-Peroxy];
- mindestens einer perfluorierten Verbindung der Formel (X-p) : 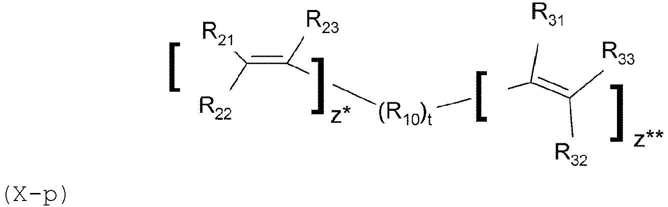 wobei
R₂₁ bis R₂₃ und R₃₁ bis R₃₃ jeweils unabhängig für Fluoratom, perfluorierte Alkylgruppe mit 1 bis 3 Kohlenstoffatomen stehen,
R₁₀ für ein Sauerstoffatom oder eine perfluorierte Alkylkette mit 2 bis 18 Kohlenstoffatomen, die vorzugsweise durch mindestens ein Sauerstoffatom unterbrochen ist und/oder mindestens ein Sauerstoffatom umfasst, steht,
t für null oder 1, vorzugsweise 1, steht;
z* und z** jeweils unabhängig für 1 oder 2 stehen; und
- mindestens einer Verbindung [Verbindung (O)], ausgewählt aus der Gruppe, die Folgendes umfasst und vorzugsweise daraus besteht:
(i) vollhalogeniertes Olefin mit 2 bis 8 Kohlenstoffatomen, vorzugsweise Tetrafluorethylen (TFE), Hexafluorpropylen (HFP), Chlortrifluorethylen (CTFE);
(ii)
CF₂=CFOR_{f},
wobei
R_{f} für Folgendes steht: eine C₁-C₆-(Per)fluoralkylgruppe, vorzugsweise -CF₃, -C₂F₅, -C₃F₇ (nachstehend auch als "PAVE" bezeichnet) ; eine C₁-C₁₂-[(Per)fluor]oxyalkylgruppe mit kettenständigen Sauerstoffatomen, vorzugsweise eine Perfluor-2-propoxypropylgruppe (nachstehend auch als "Perfluoroxyalkylvinylether" bezeichnet; eine Gruppe - CF₂OR_{f2} (nachstehend auch als "Perfluormethoxyvinylether" oder "MOVE" bezeichnet), wobei R_{f2} aus der Gruppe bestehend aus C₁-C₆-Perfluoralkylgruppen; cyclischen C₅-C₆-Perfluoralkylgruppen und C₂-C₆-Perfluoroxyalkylgruppen mit mindestens einem kettenständige Sauerstoffatom ausgewählt ist und vorzugsweise R_{f2} für -CF₂CF₃ (MOVE1), -CF₂CF₂OCF₃ (MOVE2) oder -CF₃ (MOVE3) steht;
(iii) Perfluordioxole der Formel: 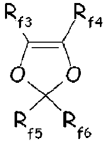
wobei R_{f3}, R_{f4}, R_{f5}, R_{f6} jeweils gleich oder voneinander verschieden sind und unabhängig aus der Gruppe bestehend aus Fluoratom und C₁-C₆-Perfluoralkylgruppen, die gegebenenfalls ein oder mehrere Sauerstoffatome enthalten, wie insbesondere -CF₃, -C₂F₅, -C₃F₇, -OCF₃, - OCF₂CF₂OCF₃, ausgewählt sind;
in Gegenwart von UV-Strahlung oder unter Erhitzen,
mit der Maßgabe, dass die Menge der Verbindung der Formel (X-p) weniger als 5 Gew.-% der Menge des PFPE-Peroxy beträgt.

11. Verfahren (P) nach Anspruch 10, wobei es sich bei dem PFPE-Peroxy um ein peroxidisches (Per)fluorpolyetherpolymer handelt, das eine (Per)fluorpolyetherkette mit zwei Kettenenden umfasst, wobei jedes der Kettenenden eine (per) fluorierte Alkylkette mit 1 bis 3 Kohlenstoffatomen, die gegebenenfalls ein oder mehrere Chloratome oder funktionelle Endgruppen, die aus Acylfluorid, Fluorformiat und Ketonen ausgewählt sind, enthält, umfasst, wobei die Kettenenden an gegenüberliegende Seiten der (Per)fluorpolyetherkette gebunden sind, wobei die (Per)fluorpolyetherkette wiederkehrende Einheiten, die unabhängig aus der Gruppe bestehend aus den Formeln (Rf-i) bis (Rf-v) gemäß obiger Definition ausgewählt sind, umfasst und vorzugsweise daraus besteht und einen Peroxidgehalt (PO), der als Gramm aktiver Sauerstoff (MW = 16) in 100 g PFPE-Peroxy definiert ist, zwischen 0,1 und 4, vorzugsweise zwischen 0,1 und 3,5, aufweist.

12. Verfahren (P) nach Anspruch 10 oder 11, wobei die mindestens eine Verbindung der Formel (X-p) der folgenden Formel entspricht:
CF₂=CF(R₁₀)ₜCF=CF₂
wobei
t für null oder 1 steht,
R₁₀ einer der folgenden Formeln entspricht:
(R₁₀-i) - (CF₂)_{d}(O)ₑ(CF₂O)_{f}Rc_{F}(O)_{e*}(CF₂)_{d*}(CF₂₀)_{f*}
wobei
d, d*, e, e*, f und f* jeweils unabhängig für null oder 1 stehen und
R_{CF} entweder für eine Perfluoralkylkette mit 1 bis 12 und vorzugsweise 1 bis 8 Kohlenstoffatomen, die gegebenenfalls durch ein oder mehrere Sauerstoffatome unterbrochen ist, steht,
(R₁₀-ii) -O-(C₃F₆O)ₕ-(CF₂)ᵢ-(OC₃F₆)ⱼ-O-
wobei h = j und h + j gleich 2 bis 6 ist und i für 2 bis 6 steht.

13. Verfahren (P) nach einem der Ansprüche 10 bis 12, wobei zwei der Verbindungen (O) verwendet werden.

14. Verfahren (P) nach Anspruch 13, wobei
- eine erste Verbindung (O) aus der Gruppe ausgewählt wird, die vollhalogeniertes Olefin mit 2 bis 8 Kohlenstoffatomen, wie Tetrafluorethylen (TFE), Hexafluorpropylen (HFP), Chlortrifluorethylen (CTFE), umfasst und vorzugsweise daraus besteht; und
- eine zweite Verbindung (O) aus der Gruppe ausgewählt wird, die Folgendes umfasst und vorzugsweise daraus besteht:
(ii)
CF₂=CFOR_{f},
wobei
R_{f} für Folgendes steht: eine C₁-C₆-(Per)fluoralkylgruppe, vorzugsweise -CF₃, -C₂F₅, -C₃F₇ (nachstehend auch als "PAVE" bezeichnet) ; eine C₁-C₁₂-[(Per)fluor]oxyalkylgruppe mit kettenständigen Sauerstoffatomen, vorzugsweise eine Perfluor-2-propoxypropylgruppe (nachstehend auch als "Perfluoroxyalkylvinylether" bezeichnet; eine Gruppe - CF₂OR_{f2} (nachstehend auch als "Perfluormethoxyvinylether" oder "MOVE" bezeichnet), wobei R_{f2} aus der Gruppe bestehend aus C₁-C₆-Perfluoralkylgruppen; cyclischen C₅-C₆-Perfluoralkylgruppen und C₂-C₆-Perfluoroxyalkylgruppen mit mindestens einem kettenständige Sauerstoffatom ausgewählt ist und vorzugsweise R_{f2} für -CF₂CF₃ (MOVE1), -CF₂CF₂OCF₃ (MOVE2) oder -CF₃ (MOVE3) steht;
(iii) Perfluordioxole der Formel: 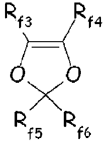
wobei R_{f3}, R_{f4}, R_{f5}, R_{f6} jeweils gleich oder voneinander verschieden sind und unabhängig aus der Gruppe bestehend aus Fluoratom und C₁-C₆-Perfluoralkylgruppen, die gegebenenfalls ein oder mehrere Sauerstoffatome enthalten, wie insbesondere -CF₃, -C₂F₅, -C₃F₇, -OCF₃, - OCF₂CF₂OCF₃, ausgewählt sind; wobei PAVE und MOVE unter Definition (i) besonders bevorzugt sind.

15. Verfahren [Verfahren P1] zur Herstellung von Polymer (P-1) gemäß Anspruch 7, wobei das Verfahren (P1) die folgenden Schritte umfasst:
a*) Inkontaktbringen mindestens eines peroxidischen (Per)fluorpolyetherpolymers [PFPE-Peroxy] mit
- mindestens einer perfluorierten Verbindung der Formel (X-p) : 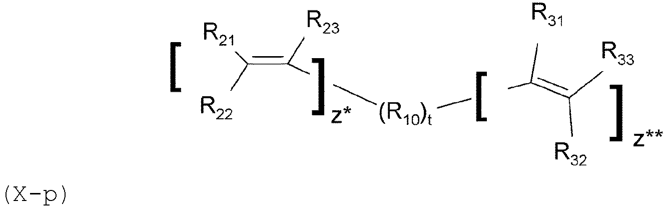 wobei
R₂₁ bis R₂₃ und R₃₁ bis R₃₃ jeweils unabhängig für Fluoratom, perfluorierte Alkylgruppe mit 1 bis 3 Kohlenstoffatomen stehen,
R₁₀ für ein Sauerstoffatom oder eine perfluorierte Alkylkette mit 2 bis 18 Kohlenstoffatomen, die vorzugsweise durch mindestens ein Sauerstoffatom unterbrochen ist und/oder mindestens ein Sauerstoffatom umfasst, steht,
t für null oder 1, vorzugsweise 1, steht;
z* und z** jeweils unabhängig für 1 oder 2 stehen; und
- mindestens einer Verbindung [Verbindung (O)], ausgewählt aus der Gruppe, die Folgendes umfasst und vorzugsweise daraus besteht:
(i) vollhalogeniertes Olefin mit 2 bis 8 Kohlenstoffatomen, wie Tetrafluorethylen (TFE), Hexafluorpropylen (HFP), Chlortrifluorethylen (CTFE);
(ii)
CF₂=CFOR_{f},
wobei
R_{f} für Folgendes steht: eine C₁-C₆-(Per)fluoralkylgruppe, vorzugsweise -CF₃, -C₂F₅, -C₃F₇ (nachstehend auch als "PAVE" bezeichnet); eine C₁-C₁₂-[(Per)fluor]oxyalkylgruppe mit kettenständigen Sauerstoffatomen, vorzugsweise eine Perfluor-2-propoxypropylgruppe (nachstehend auch als "Perfluoroxyalkylvinylether" bezeichnet; eine Gruppe - CF₂OR_{f2} (nachstehend auch als "Perfluormethoxyvinylether" oder "MOVE" bezeichnet), wobei R_{f2} aus der Gruppe bestehend aus C₁-C₆-Perfluoralkylgruppen; cyclischen C₅-C₆-Perfluoralkylgruppen und C₂-C₆-Perfluoroxyalkylgruppen mit mindestens einem kettenständige Sauerstoffatom ausgewählt ist und vorzugsweise R_{f2} für -CF₂CF₃ (MOVE1), -CF₂CF₂OCF₃ (MOVE2) oder -CF₃ (MOVE3) steht;
(iii) Perfluordioxole der Formel: 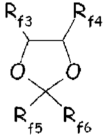
wobei R_{f3}, R_{f4}, R_{f5}, R_{f6} jeweils gleich oder voneinander verschieden sind und unabhängig aus der Gruppe bestehend aus Fluoratom und C₁-C₆-Perfluoralkylgruppen, die gegebenenfalls ein oder mehrere Sauerstoffatome enthalten, wie insbesondere -CF₃, -C₂F₅, -C₃F₇, -OCF₃, - OCF₂CF₂OCF₃, ausgewählt sind;
wobei
die Menge der Verbindung der Formel (X-p) weniger als 5 Gew.-% der Menge des PFPE-Peroxy beträgt;
b*) Reagierenlassen des PFPE-Peroxy, der Verbindung der Formel (X-p) und der mindestens einen Verbindung (O) in Gegenwart von UV-Strahlung oder Erhitzen;
c*) Fluorieren, wodurch das Copolymer (P-1) erhalten wird.

16. Verfahren [Verfahren (P2-a)] zur Herstellung von Copolymer (P-2) gemäß Anspruch 8, wobei das Verfahren (P2-a) die folgenden Schritte umfasst:
a') Inkontaktbringen mindestens eines peroxidischen (Per)fluorpolyetherpolymers [PFPE-Peroxy] mit mindestens einer Verbindung (O) gemäß obiger Definition;
b') Reagierenlassen das PFPE-Peroxy und der Verbindung (O) in Gegenwart von UV-Strahlung oder Erhitzen;
c') Stoppen der UV-Strahlung oder des Erhitzens;
d') Inkontaktbringen der Reaktionsmischung mit mindestens einer perfluorierten Verbindung der Formel (X-p): 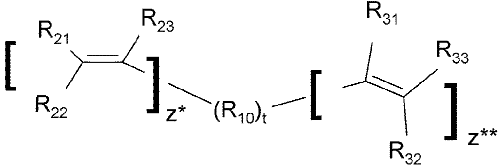 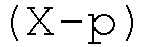 wobei
R₂₁ bis R₂₃ und R₃₁ bis R₃₃ jeweils unabhängig für Fluoratom, perfluorierte Alkylgruppe mit 1 bis 3 Kohlenstoffatomen stehen,
R₁₀ für ein Sauerstoffatom oder eine perfluorierte Alkylkette mit 2 bis 18 Kohlenstoffatomen, die gegebenenfalls durch mindestens ein Sauerstoffatom unterbrochen ist und/oder mindestens ein Sauerstoffatom umfasst, steht,
t für null oder 1, vorzugsweise 1, steht;
z* und z** jeweils unabhängig für 1 oder 2 stehen, wobei
die Menge der Verbindung der Formel (X-p) weniger als 5 Gew.-% der Menge des PFPE-Peroxy beträgt;
e') Ablaufenlassen der Reaktion in Gegenwart von UV-Strahlung oder Erhitzen; und
f') Fluorieren, wodurch das Copolymer (P2) erhalten wird.

17. Verfahren [Verfahren (P2-b)] zur Herstellung von Copolymer (P-2) gemäß Anspruch 8, wobei das Verfahren (P2-b) die folgenden Schritte umfasst:
a") Inkontaktbringen mindestens eines peroxidischen (Per)fluorpolyetherpolymers [PFPE-Peroxy] mit mindestens einer perfluorierten Verbindung der Formel (X-p): 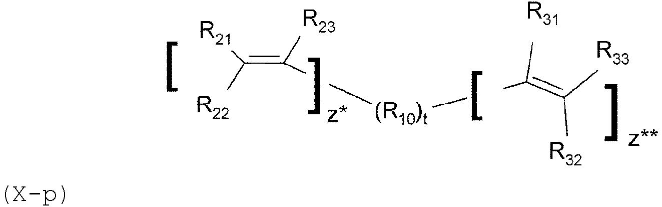 wobei
R₂₁ bis R₂₃ und R₃₁ bis R₃₃ jeweils unabhängig für Fluoratom, perfluorierte Alkylgruppe mit 1 bis 3 Kohlenstoffatomen stehen,
R₁₀ für ein Sauerstoffatom oder eine perfluorierte Alkylkette mit 2 bis 18 Kohlenstoffatomen, die gegebenenfalls durch mindestens ein Sauerstoffatom unterbrochen ist und/oder mindestens ein Sauerstoffatom umfasst, steht,
t für null oder 1, vorzugsweise 1, steht;
z* und z** jeweils unabhängig für 1 oder 2 stehen,
wobei
die Menge der Verbindung der Formel (X-p) weniger als 5 Gew.-% der Menge des PFPE-Peroxy beträgt;
b") Reagierenlassen das PFPE-Peroxy und der Verbindung der Formel (EX-p) in Gegenwart von UV-Strahlung oder Erhitzen;
c") Stoppen der UV-Strahlung oder des Erhitzens;
d") Inkontaktbringen der in Schritt c") erhaltenen Reaktionsmischung mit mindestens einer Verbindung (O) gemäß obiger Definition;
e") Ablaufenlassen der Reaktion in Gegenwart von UV-Strahlung oder Erhitzen; und
f") Fluorieren, wodurch das Copolymer (P2) erhalten wird.

18. Zusammensetzung [Zusammensetzung (CL)], umfassend mindestens ein Copolymer (P) gemäß einem der Ansprüche 1 bis 8 oder eine Mischung (P) gemäß Anspruch 9, mindestens ein Grundöl, das aus der Gruppe umfassend teilfluorierte, vollfluorierte und hydrierte Grundöle ausgewählt ist, mit der Maßgabe, dass das Grundöl in der Lage ist, mit dem Copolymer (P) eine Lösung zu bilden, und gegebenenfalls mindestens ein Additiv, das aus Verdickungsmitteln, Rostschutzmitteln, Antioxidantien, Wärmestabilisatoren, Pourpoint-Erniedrigern, Verschleißschutzmitteln, einschließlich solcher für hohe Drücke, Dispergiermitteln, Tracern, Farbstoffen, Talkum und anorganischen Füllstoffen ausgewählt ist.

19. Verfahren zum Schmieren mindestens einer Oberfläche mindestens eines Gegenstands, wobei das Verfahren das Inkontaktbringen mindestens eines Copolymers (P) gemäß den Ansprüchen 1 bis 8 oder der Mischung (P) gemäß Anspruch 9 oder der Zusammensetzung (CL) gemäß Anspruch 18 mit der mindestens einen Oberfläche umfasst.

20. Verfahren nach Anspruch 19, wobei der Gegenstand ausgwählt ist aus Pumpen zur Verwendung bei Öl- und Gasanwendungen, wie elektrischen Tauchpumpen, Rotationsmaschinen, wie Dampfturbinen und Gasturbinen; elektrischen Verbindern; Lagern von Lüfterkupplungen oder Kühlventilatoren oder automatischen Kupplungen für Schwerlastfahrzeuge, insbesondere Lagern der Kupplungen.

21. Verfahren zum Entgegenwirken von Schwingungen und/oder Stößen in einer Vorrichtung, wobei das Verfahren das Bereitstellen einer Vorrichtung mit einer Dämpfervorrichtung umfasst, wobei die Dämpfervorrichtung mindestens ein Copolymer (P) gemäß den Ansprüchen 1 bis 8 oder die Mischung (P) gemäß Anspruch 9 oder die Zusammensetzung (CL) gemäß Anspruch 18 umfasst.

## Revendications

1. Copolymère bloc [copolymère (P)] comprenant une première et une deuxième chaîne (per) fluoropolyéther [chaîne PFPE] ayant chacune deux extrémités de chaîne, dans lequel la première extrémité de chaîne desdites première et deuxième chaînes PFPE comprend un groupement alkyle perfluoré et la deuxième extrémité de chaîne desdites première et deuxième chaînes PFPE sont liées l'une à l'autre via :
- un premier bloc [bloc (1)] répondant à la formule (I) : 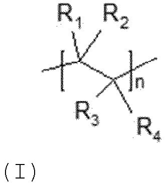 dans laquelle
n vaut 0 ou est un nombre entier allant de 1 à 3 ;
R₁ à R₄, chacun indépendamment, sont choisis dans le groupe comprenant, préférablement constitué par, un atome de fluor, un groupement alkyle perfluoré linéaire ou ramifié ayant de 1 à 6 atomes de carbone, un groupement de formule (II) :
(II) - (R₁₀)ₜ[C(R₁₁)(R₁₂)-C(R₁₃)(R₁₄)(R₁₅)]₂
dans laquelle
R₁₀ est un atome d'oxygène, ou une chaîne alkyle perfluorée bi-/tri-/tétravalente comprenant de 1 à 24 atomes de carbone éventuellement interrompue par et/ou comprenant au moins un atome d'oxygène,
t vaut zéro ou 1,
z est un nombre entier allant de 1 à 3 ;
R₁₁ à R₁₅, chacun indépendamment, sont choisis dans le groupe comprenant, préférablement constitué par, un atome de fluor, un groupement alkyle perfluoré linéaire ou ramifié ayant de 1 à 6 atomes de carbone et un groupement de formule (III) :
-[(A^)_{a^}-(B^)_{v^}-(E^)_{L^}]_{u^}-(C^)-T (III)
dans laquelle
a^ vaut zéro ou 1,
v^ vaut zéro ou est un nombre entier allant de 1 à 3,
L^ vaut zéro ou est un nombre entier allant de 1 à 250,
u^ vaut zéro ou est un nombre entier allant de 1 à 50 ;
A^ est une chaîne PFPE
B^ est un groupement de formule :
- [C (R_{1^})(R_{2^})-C (R_{3^})(R_{4^})]-
dans laquelle R_{1^} à R_{4^} revêtent chacun indépendamment la signification définie ci-dessus pour chacun parmi R₁ à R₄,
E^ est un groupement de formule - (CR_{100^}R_{101^}CR_{102^}R_{103^})-dans laquelle
R_{100^} et R_{101^} sont choisis indépendamment parmi un atome d'halogène, plus préférablement un atome de fluor ou de chlore, et
R_{102^} et R_{103^} sont choisis indépendamment parmi un atome d'halogène, plus préférablement un atome de fluor ou de chlore ; une chaîne alkyle linéaire ou ramifiée comprenant de 1 à 6 atomes de carbone ; -OR₂₀₀ où R₂₀₀ est une chaîne perfluorée linéaire ou ramifiée comprenant de 1 à 6 atomes de carbone ou un groupement de formule - CF₂OR₂₀₁ dans laquelle R₂₀₁ est une chaîne alkyle perfluorée comprenant de 1 à 6 atomes de carbone, éventuellement interrompue par un ou plusieurs atomes oxygène d'éther ; ou
l'un parmi R_{100^} et R_{101^} et l'un parmi R_{102^} et R_{103^} sont un atome de fluor et l'autre parmi R_{100^} et R_{101^} et l'autre parmi R_{102^} et R_{103^} forment ensemble un anneau cyclique perhalogéné ayant de 4 à 6 chaînons, comprenant éventuellement des hétéroatomes, tels que des atomes d'oxygène ;
C^ est une chaîne PFPE, et
T est un groupement alkyle perfluoré ;
et
- un deuxième bloc [bloc (2)] répondant à la formule (IV) :
-[(CR¹*R²*CR³*R⁴*)_{n*}-(E)_{L}]- (IV)
dans laquelle
n* vaut zéro ou est un nombre entier allant de 1 à 10,
L vaut zéro ou est un nombre entier allant de 1 à 250 ; chacun parmi R¹* à R⁴* est choisi dans le groupe comprenant, préférablement constitué par, un atome de fluor, un groupement alkyle perfluoré linéaire ou ramifié ayant de 1 à 6 atomes de carbone, un groupement de formule (II) tel que défini ci-dessus,
E revêt la même signification que celle donnée pour E^ ci-dessus ;
à condition que :
- dans ledit copolymère (P)
-- la somme de (n + n* + v^) aille de 1 à 15, préférablement de 1 à 11, plus préférablement de 1 à 9 ;
**--** la somme de (L+L^) aille de 1 à 500, préférablement de 2 à 500, plus préférablement de 2 à 300 ;
**--** ledit bloc (1) et ledit bloc (2) sont répartis statistiquement ;
- dans ladite formule (I) :
- - au moins l'un parmi R₁ à R₄ est un groupement de formule (II),
- - l'un parmi R₁₁ ou R₁₂ et l'un parmi R₁₃ à R₁₅, est un groupement de formule (III) ;
- dans ladite formule (III) et ladite formule (IV)
-- les motifs récurrents sont répartis statistiquement,
- dans ladite formule (III)
-- lorsque a vaut 1, au moins l'un parmi v^ et L^ est différent de 0, et
- dans ladite formule (IV)
-- au moins l'un parmi n* et L est différent de zéro.

2. Copolymère (P) selon la revendication 1, dans lequel :
- ladite première extrémité de chaîne desdites première et deuxième chaînes PFPE et ledit T dans la formule (III), identiques ou différents les uns des autres, sont un groupement alkyle perfluoré ayant de 1 à 3 atomes de carbone ; et/ou
- ladite première et deuxième chaîne PFPE, ledit A^ et ledit C^ sont identiques ou différents les uns des autres ; et/ou
- ladite première chaîne PFPE est liée audit bloc (1) via une liaison sigma ou un groupement -(C)- choisi parmi - CF₂-, -CF_{2C}F₂- ou -O- ; et/ou
- ledit bloc (2) est lié à ladite deuxième chaîne PFPE via une liaison sigma ou un groupement -(C)- choisi parmi -CF₂-, -CF₂CF₂- ou -O- ; et/ou
- chacune parmi lesdites chaînes PFPE est une chaîne partiellement ou totalement fluorée [chaîne (R_{f})] comprenant, préférablement constituée par, des motifs répétitifs R°, lesdits motifs répétitifs étant choisis indépendamment dans le groupe constitué par :
(i) -CFXO-, où X est F ou CF₃ ;
(ii) -CFXCFXO-, où X, identique ou différent à chaque occurrence, est F ou CF₃, à condition qu'au moins l'un parmi X soit -F ;
(iii) -CF₂CF₂CW₂O-, où chacun parmi W, identiques ou différents les uns des autres, sont F, Cl, H ;
(iv) -CF₂CF₂CF₂CF₂O-;
(v) -(CF₂)ⱼ-CFZ-O- où j est un nombre entier allant de 0 à 3 et Z est un groupement de formule générale -O-R_{(f-a)}-T, où R_{(f-a)} est une chaîne fluoropolyoxyalkène comprenant un nombre de motifs répétitifs allant de 0 à 10, lesdits motifs répétitifs étant choisis parmi ce qui suit : - CFXO-, -CF₂CFXO-, -CF₂CF₂CF₂O-, -CF₂CF₂CF₂CF₂O-, chacun parmi X étant indépendamment F ou CF₃ et T étant un groupement C₁-C₃ perfluoroalkyle.

3. Copolymère (P) selon la revendication 1 ou la revendication 2, dans lequel, dans la formule (II) :
- t vaut 0 ; ou
- t vaut 1 et R₁₀ répond à l'une des formules suivantes :
(R₁₀-i) -(CF₂)_{d}(O)ₑ(CF₂₀)_{f}Rc_{F}(O)_{e*}(CF₂)_{d*}(CF₂₀)_{f*}
dans lesquelles
chacun parmi d, d*, e, e*, f et f* vaut indépendamment zéro ou 1 et
R_{CF} représente soit une chaîne perfluoroalkyle comprenant de 1 à 12, préférablement de 1 à 8 atomes de carbone, éventuellement interrompue par un ou plusieurs atomes d'oxygène
(R₁₀-ii) -O-(C₃F₆O)ₕ-(CF₂)ᵢ-(OC₃F₆)ⱼ-O-
où h = j et h + j va de 2 à 6, et i va de 2 à 6.

4. Copolymère (P) selon l'une quelconque des revendications précédentes, dans lequel, dans la formule (II) :
- z est égal à 1 et R₁₀ est un atome d'oxygène, ou une chaîne alkyle perfluorée bivalente comprenant de 1 à 24 atomes de carbone éventuellement interrompue par et/ou comprenant au moins un atome d'oxygène ; et/ou
- l'un des substituants R₁₁ et R₁₂ est un groupement de formule (III) et l'autre substituant est choisi parmi un atome de fluor ou une chaîne alkyle perfluorée ayant de 1 à 3 atomes de carbone, plus préférablement un atome de fluor ou une chaîne alkyle perfluorée ayant 1 atome de carbone ; et/ou
- l'un des substituants R₁₃ à R₁₅ est un groupement de formule (III) et les deux autres substituants sont choisis indépendamment parmi un atome de fluor ou une chaîne alkyle perfluorée ayant de 1 à 3 atomes de carbone, plus préférablement un atome de fluor ou une chaîne alkyle perfluorée ayant 1 atome de carbone.

5. Copolymère (P) selon l'une quelconque des revendications précédentes, dans lequel :
- dans la formule (III), -(E^)_{L^}- répond à la formule suivante :
-(CR_{100^}R_{101^}CR_{102^}R_{103^})_{l^}-(CR_{100^}R_{111^}CR_{112^}R_{113^})_{m^}-
dans laquelle
l^ et m^ sont chacun indépendamment un nombre entier allant de 1 à 250, plus préférablement allant de 2 à 250, de telle sorte que la somme de L+m aille de 2 à 250 ; R_{100^}, R_{101^}, R_{110^} et R_{111^} sont choisis indépendamment parmi un atome d'halogène, plus préférablement un atome de fluor ou de chlore, et
R_{102^}, R_{103^}, R_{112^} et R_{113^} sont choisis indépendamment parmi un atome d'halogène, plus préférablement un atome de fluor ou de chlore ; une chaîne alkyle linéaire ou ramifiée comprenant de 1 à 6 atomes de carbone ; -OR₂₀₀ où R₂₀₀ est une chaîne perfluorée linéaire ou ramifiée comprenant de 1 à 6 atomes de carbone ou un groupement de formule -CF₂OR₂₀₁ où R₂₀₁ est une chaîne alkyle perfluorée comprenant de 1 à 6 atomes de carbone, éventuellement interrompue par un ou plusieurs atomes oxygène d'éther ; ou
l'un parmi R_{100^} et R_{101^} et l'un parmi R_{102^} et R_{103^} sont un atome de fluor et l'autre parmi R_{100^} et R_{101^} et l'autre parmi R_{102^} et R_{103^} forment ensemble un anneau cyclique perhalogéné ayant de 4 à 6 chaînons, comprenant éventuellement des hétéroatomes, tels que des atomes d'oxygène ; ou
l'un parmi R_{110^} et R_{111^} et l'un parmi R_{112^} et R_{113^} sont un atome de fluor et l'autre parmi R_{110^} et R_{111^} et l'autre parmi R_{112^} et R_{113^} forment ensemble un anneau cyclique perhalogéné ayant de 4 à 6 chaînons, comprenant éventuellement des hétéroatomes, tels que des atomes d'oxygène ;
à condition que -(CR_{100^}R_{101^}CR_{102^}R_{103^})_{l^}- et - (CR_{100^}R_{111^}CR_{112^}R_{113^})_{m^}- soient différents l'un de l'autre et statistiquement répartis ; et/ou
- dans la formule (IV), -(E)_{L}- répond à la formule suivante :
-(CR₁₀₀R₁₀₁CR₁₀₂R₁₀₃)ₗ-(CR₁₁₀R₁₁₁CR₁₁₂R₁₁₃)ₘ-
dans laquelle
chacun parmi l, m, R₁₀₀, R_{101,} R₁₁₀, R₁₁₁, R₁₀₂, R₁₀₃, R₁₁₂ et R₁₁₃ revêtent les significations définies ci-dessus pour l^, m^, R_{100^}, R_{101^}, R_{110^}, R_{111^}, R_{102^}, R_{103^}, R_{112^} et R_{113^} respectivement.

6. Copolymère (P) selon l'une quelconque des revendications précédentes, ledit copolymère (P) étant exempt de groupes pendants comprenant tout motif capable de subir une réaction chimique supplémentaire, tel que des motifs insaturés.

7. Copolymère (P) selon l'une quelconque des revendications précédentes, ledit copolymère (P) étant un copolymère bloc [(P-1)] comprenant une première et une deuxième chaîne PFPE, ayant chacune deux extrémités de chaîne, où la première extrémité de chaîne desdites première et deuxième chaînes PFPE comprend un groupement alkyle perfluoré et la deuxième extrémité de chaîne desdites première et deuxième chaînes PFPE sont liées l'une à l'autre via :
- un bloc répondant à la formule (IV) :
-[(CR¹*R²*CR³*R⁴*)_{n*}-(E)_{L}]- (IV)
dans laquelle
n* est un nombre entier allant de 1 à 10, préférablement de 1 à 5, plus préférablement de 1 à 3, encore plus préférablement valant 1 ;
L vaut zéro ou est un nombre entier allant de 1 à 250, plus préférablement de 2 à 250 ;
chacun parmi R¹* à R⁴* est choisi dans le groupe comprenant, préférablement constitué par, un atome de fluor, un groupement alkyle perfluoré linéaire ou ramifié ayant de 1 à 3 atomes de carbone, un groupement de formule (II) :
(II) - (R₁₀)t [C (R₁₁)(R₁₂)-C (R₁₃)(R₁₄)(R₁₅)]_{z}
dans laquelle
R₁₀ est un atome d'oxygène, ou une chaîne alkyle perfluorée bi-/tri-/tétravalente comprenant de 1 à 24 atomes de carbone éventuellement interrompue par et/ou comprenant au moins un atome d'oxygène,
t vaut zéro ou 1,
z est un nombre entier allant de 1 à 3 ;
R₁₁ à R₁₅, chacun indépendamment, sont choisis dans le groupe comprenant, de préférence constitué par, un atome de fluor, un groupement alkyle perfluoré linéaire ou ramifié ayant de 1 à 3 atomes de carbone, un groupement de formule (III) :
-[(A^)_{a^}-(B^)_{v^}-(E^)_{L^}]_{u^}-(C^)-T (III)
dans laquelle
a^ vaut zéro ou 1,
v^ vaut zéro ou est un nombre entier allant de 1 à 3,
L^ est un nombre entier allant de 1 à 250, préférablement de 2 à 250,
u^ est un nombre entier allant de 1 à 50 ;
A^ est une chaîne PFPE,
B^ est un groupement de formule
- [C (R_{1^})(R_{2^})-C (R_{3^})(R_{4^})-
dans laquelle R_{1^} à R_{4^} revêtent chacun indépendamment la signification définie ci-dessus pour chacun parmi R₁ à R₄,
E^ est un groupement de formule - (CR_{100^}R_{101^}CR_{102^}R_{103^})-dans laquelle
R_{100^} et R_{101^} sont choisis indépendamment parmi un atome d'halogène, plus préférablement un atome de fluor ou de chlore, et
R_{102^} et R_{103^} sont choisis indépendamment parmi un atome d'halogène, plus préférablement un atome de fluor ou de chlore ; une chaîne alkyle linéaire ou ramifiée comprenant de 1 à 6 atomes de carbone ; -OR₂₀₀ où R₂₀₀ est une chaîne perfluorée linéaire ou ramifiée comprenant de 1 à 6 atomes de carbone ou un groupement de formule - CF₂OR₂₀₁ dans laquelle R₂₀₁ est une chaîne alkyle perfluorée comprenant de 1 à 6 atomes de carbone, éventuellement interrompue par un ou plusieurs atomes oxygène d'éther ; ou
l'un parmi R_{100^} et R_{101^} et l'un parmi R_{102^} et R_{103^} sont un atome de fluor et l'autre parmi R_{100^} et R_{101^} et l'autre parmi R_{102^} et R_{103^} forment ensemble un anneau cyclique perhalogéné ayant de 4 à 6 chaînons, comprenant éventuellement des hétéroatomes, tels que des atomes d'oxygène ;
C^ est une chaîne PFPE, et
T est un groupement alkyle perfluoré ;
E revêt la même signification que celle donnée pour E^ ci-dessus ;
à condition que
- dans ledit copolymère (P-1) :
-- la somme de (n* + v^) aille de 1 à 15,
-- la somme de (L+L^) aille de 2 à 500, préférablement de 3 à 300, plus préférablement de 4 à 250, et
-- les motifs récurrents dans les formules (III) et (IV) soient répartis statistiquement ;
et
- dans ladite formule (IV) :
-- au moins l'un parmi R_{1^} à R_{4^} soit un groupement de formule (II),
-- l'un parmi R₁₁ ou R₁₂ et l'un parmi R₁₃ à R₁₅, soit un groupement de formule (III).

8. Copolymère (P) selon l'une quelconque des revendications précédentes, ledit copolymère (P) étant un copolymère bloc [(P-2)] comprenant une première et une deuxième chaîne PFPE, ayant chacune deux extrémités de chaîne, où la première extrémité de chaîne desdites première et deuxième chaînes PFPE comprend un groupement alkyle perfluoré et la deuxième extrémité de chaîne desdites première et deuxième chaînes PFPE sont liées l'une à l'autre via :
- un premier bloc [bloc (1)] répondant à la formule (I) : 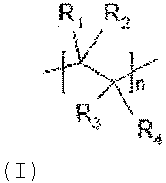 dans laquelle
n est un nombre entier allant de 1 à 3 ;
R₁ à R₄, chacun indépendamment, sont choisis dans le groupe comprenant, préférablement constitué par, un atome de fluor, un groupement alkyle perfluoré linéaire ou ramifié ayant de 1 à 6 atomes de carbone, un groupement de formule (II) :
(II) -(R₁₀)ₜ[C(R₁₁)(R₁₂)-C(R₁₃)(R₁₄)(R₁₅)]_{z}
dans laquelle
R₁₀ est un atome d'oxygène, ou une chaîne alkyle perfluorée bi-/tri-/tétravalente comprenant de 1 à 24 atomes de carbone éventuellement interrompue par et/ou comprenant au moins un atome d'oxygène,
t vaut zéro ou 1,
z est un nombre entier allant de 1 à 3 ;
R₁₁ à R₁₅, chacun indépendamment, sont choisis dans le groupe comprenant, de préférence constitué par, un atome de fluor, un groupement alkyle perfluoré linéaire ou ramifié ayant de 1 à 6 atomes de carbone, un groupement de formule (III) :
-[(A^)_{a^}-(B^)_{v^}-(E^)_{L^}]_{u^}-(C^)-T (III)
dans laquelle
a^ vaut zéro ou 1,
v^ vaut zéro ou est un nombre entier allant de 1 à 3,
L^ est un nombre entier allant de 1 à 250, préférablement de 2 à 250,
u^ vaut zéro ou est un nombre entier allant de 1 à 50 ;
A^ est une chaîne PFPE,
B^ est un groupement de formule
-[C(R_{1^})(R_{2^})-C(R_{3^})(R_{4^})-
dans laquelle R_{1^} à R_{4^} revêtent chacun indépendamment la signification définie ci-dessus pour chacun parmi R₁ à R₄,
E^ est un groupement de formule
- (CR_{100^}R_{101^}CR_{102^}R_{103^})-
dans laquelle
R_{100^} et R_{101^} sont choisis indépendamment parmi un atome d'halogène, plus préférablement un atome de fluor ou de chlore, et
R_{102^} et R_{103^} sont choisis indépendamment parmi un atome d'halogène, plus préférablement un atome de fluor ou de chlore ; une chaîne alkyle linéaire ou ramifiée comprenant de 1 à 6 atomes de carbone ; -OR₂₀₀ où R₂₀₀ est une chaîne perfluorée linéaire ou ramifiée comprenant de 1 à 6 atomes de carbone ou un groupement de formule - CF₂OR₂₀₁ dans laquelle R₂₀₁ est une chaîne alkyle perfluorée comprenant de 1 à 6 atomes de carbone, éventuellement interrompue par un ou plusieurs atomes oxygène d'éther ; ou
l'un parmi R_{100^} et R_{101^} et l'un parmi R_{102^} et R_{103^} sont un atome de fluor et l'autre parmi R_{100^} et R_{101^} et l'autre parmi R_{102^} et R_{103^} forment ensemble un anneau cyclique perhalogéné ayant de 4 à 6 chaînons, comprenant éventuellement des hétéroatomes, tels que des atomes d'oxygène ;
C^ est une chaîne PFPE, et
T est un groupement alkyle perfluoré ;
et
- un deuxième bloc [bloc (2)] répondant à la formule (IV) :
-[(CR¹*R²*CR³*R⁴*)_{n*}-(E)_{L*}]- (IV)
dans laquelle
n* vaut 0 ou est un nombre entier allant de 1 à 10, préférablement de 1 à 5, plus préférablement de 1 à 3, encore plus préférablement valant 0 ou 1 ;
L* vaut 0 ou est un nombre entier allant de 1 à 250, plus préférablement de 2 à 250 ;
chacun parmi R¹* à R⁴* est choisi dans le groupe comprenant, de préférence constitué par, un atome de fluor, un groupement alkyle perfluoré linéaire ou ramifié ayant de 1 à 6 atomes de carbone, un groupement de formule (II) tel que défini ci-dessus,
E revêt la même signification que celle donnée pour E^ ci-dessus ;
à condition que :
- dans ledit copolymère (P-2) :
-- la somme de (n + n* + v) aille de 1 à 15, préférablement de 1 à 11, plus préférablement de 1 à 9 ;
**--** la somme de (L^+L*) aille de 1 à 500, préférablement de 2 à 500, plus préférablement de 3 à 300, et
**--** ledit bloc (1) et ledit bloc (2) soient répartis statistiquement ;
et
- dans ladite formule (I) :
-- au moins l'un parmi R₁ à R₄ soit un groupement de formule (II),
-- l'un parmi R₁₁ ou R₁₂ et l'un parmi R₁₃ à R₁₅, soit un groupement de formule (III) ; et
- dans ladite formule (III) et ladite formule (IV), les motifs récurrents soient répartis statistiquement,
- dans ladite formule (III)
-- lorsque a vaut 1, au moins l'un parmi v^ et L^ soit différent de 0 et
- dans ladite formule (IV), au moins l'un parmi n* et L* soit différent de zéro.

9. Mélange [mélange (P)] comprenant deux, ou plus, copolymères (P) tels que définis selon l'une quelconque des revendications 1 à 8.

10. Procédé [procédé (P)] pour la préparation du copolymère (P) tel que défini selon l'une quelconque des revendications 1 à 8, ledit procédé (P) comprenant au moins une étape de mise en contact :
- d'au moins un polymère de (per)fluoropolyéther comprenant des groupements peroxidiques [PFPE peroxy] ;
- d'au moins un composé perfluoré de formule (X-p) : 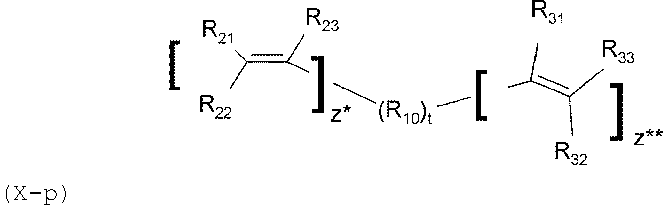 dans laquelle
chacun parmi R₂₁ à R₂₃ et R₃₁ à R₃₃ est indépendamment un atome de fluor, un groupement alkyle perfluoré ayant de 1 à 3 atomes de carbone,
R₁₀ est un atome d'oxygène, ou une chaîne alkyle perfluorée comprenant de 2 à 18 atomes de carbone, préférablement interrompue par et/ou comprenant au moins un atome d'oxygène,
t vaut zéro ou 1, préférablement 1 ;
chacun parmi z* et z** vaut indépendamment 1 ou 2 ; et
- au moins un composé [composé (O)] choisi dans le groupe comprenant, préférablement constitué par :
(i) une oléfine entièrement halogénée comprenant de 2 à 8 atomes de carbone, préférablement le tétrafluoroéthylène (TFE), l'hexafluoropropylène (HFP), le chlorotrifluoroéthylène (CTFE) ;
(ii)
CF₂=CFOR_{f},
dans lesquelles
R_{f} est un groupement C₁-C₆ (per)fluoroalkyle, préférablement -CF₃, -C₂F₅, -C₃F₇ (également désigné par « PAVE » ci-après) ; un groupement C₁-C₁₂ [(per)fluoro]-oxyalkyle comprenant des atomes d'oxygène caténaires, préférablement un groupement perfluoro-2-propoxypropyle (également désigné par « perfluoro-oxy-alkyl-vinyl éthers » ci-après) ; un groupement -CF₂OR_{f2} (également désigné par « perfluoro-méthoxy-vinyl éthers » ou « MOVE » ci-après) où R_{f2} est choisi dans le groupe constitué par les C₁-C₆ perfluoro-alkyles ; les C₅-C₆ perfluoro-alkyles cycliques, et les C₂-C₆ perfluoro-oxy-alkyles, comprenant au moins un atome d'oxygène caténaire, préférablement R_{f2} est -CF₂CF₃ (MOVE1), - CF₂CF₂OCF₃ (MOVE2), ou -CF₃ (MOVE3) ;
(iii) les perfluorodioxoles répondant à la formule : 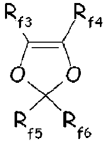
dans laquelle chacun parmi R_{f3}, R_{f4}, R_{f5}, R_{f6}, égaux ou différents les uns des autres, est choisi indépendamment dans le groupe constitué par un atome de fluor et des groupements C₁-C₆ perfluoroalkyle, comprenant éventuellement un ou plusieurs atomes d'oxygène, tel que notamment -CF₃, -C₂F₅, -C₃F₇, -OCF₃, -OCF₂CF₂OCF₃ ;
en présence d'un rayonnement UV ou sous chauffage,
à condition que la quantité du composé de formule (X-p) soit inférieure à 5% en poids de la quantité de PFPE peroxy .

11. Procédé (P) selon la revendication 10, dans lequel ledit PFPE peroxy est un polymère de (per) fluoropolyéther peroxydique comprenant une chaîne (per)fluoropolyéther ayant deux extrémités de chaîne, chacune desdites extrémités de chaîne comprenant une chaîne alkyle (per)fluorée ayant de 1 à 3 atomes de carbone, contenant éventuellement un ou plusieurs atomes de chlore ou des groupements terminaux fonctionnels choisis parmi le fluorure d'acyle, un fluoroformiate et des cétones, lesdites extrémités de chaîne étant liées aux côtés opposés de ladite chaîne (per)fluoropolyéther, ladite chaîne (per)fluoropolyéther comprenant, préférablement étant constituée, de motifs répétitifs choisis indépendamment dans le groupe constitué par les formules (Rf-i) à (Rf-v) telles que définies ci-dessus et ayant une teneur peroxydique (PO), définie en grammes d'oxygène actif (Mw = 16) dans 100 g de PFPE peroxy, comprise entre 0,1 et 4, préférablement entre 0,1 et 3,5.

12. Procédé (P) selon les revendications 10 ou 11, dans lequel ledit au moins un composé de formule (X-p) répond à la formule suivante :
CF₂=CF(R₁₀)ₜCF=CF₂
dans laquelle
t vaut zéro ou 1,
R₁₀ répond à l'une des formules suivantes :
(R₁₀-i) -(CF₂)_{d}(O)ₑ(CF₂₀)_{f}Rc_{F}(O)_{e*}(CF₂)_{d*}(CF₂₀)_{f*}
dans lesquelles
chacun parmi d, d*, e, e*, f et f* vaut indépendamment zéro ou 1 et
R_{CF} représente soit une chaîne perfluoroalkyle comprenant de 1 à 12, préférablement de 1 à 8 atomes de carbone,
éventuellement interrompue par un ou plusieurs atomes d'oxygène
(R₁₀-ii) -O-(C₃F₆O)ₕ-(CF₂)ᵢ-(OC₃F₆)ⱼ-O-
où h = j et h + j va de 2 à 6, et i va de 2 à 6.

13. Procédé (P) selon l'une quelconque des revendications 10 à 12, dans lequel deux parmi lesdits composés (O) sont utilisés.

14. Procédé (P) selon la revendication 13, dans lequel
- un premier composé (O) est choisi dans le groupe comprenant, préférablement constitué par, des oléfines entièrement halogénées comprenant de 2 à 8 atomes de carbone, telles que le tétrafluoroéthylène (TFE), l'hexafluoropropylène (HFP), le chlorotrifluoroéthylène (CTFE) ; et
- un deuxième composé (O) est choisi dans le groupe comprenant, préférablement constitué par :
(ii)
CF₂=CFOR_{f},
dans laquelle
R_{f} est un groupement C₁-C₆ (per)fluoroalkyle, préférablement -CF₃, -C₂F₅, -C₃F₇ (également désigné par « PAVE » ci-après) ; un groupement C₁-C₁₂ [(per)fluoro]-oxyalkyle comprenant des atomes d'oxygène caténaires, plus préférablement perfluoro-2-propoxypropyle (également appelé « perfluoro-oxy-alkyl-vinyl éthers » ci-après) ; un groupement -CF₂OR_{f2} (également appelé « perfluoro-méthoxy-vinyl éthers » ou « MOVE » ci-après) où R_{f2} est choisi dans le groupe constitué par les C₁-C₆ perfluoro-alkyles ; les C₅-C₆ perfluoro-alkyles cycliques, et les C₂-C₆ perfluoro-oxy-alkyles, comprenant au moins un atome d'oxygène caténaire, préférablement R_{f2} est -CF₂CF₃ (MOVE1), -CF₂CF₂OCF₃ (MOVE2), ou -CF₃ (MOVE3) ;
(iii) les perfluorodioxoles répondant à la formule : 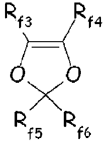 dans laquelle chacun parmi R_{f3}, R_{f4}, R_{f5}, R_{f6}, égaux ou différents les uns des autres, sont choisis indépendamment dans le groupe constitué par un atome de fluor et des groupements C₁-C₆ perfluoroalkyle, comprenant éventuellement un ou plusieurs atomes d'oxygène, tel que notamment -CF₃, -C₂F₅, -C₃F₇, -OCF₃, - OCF₂CF₂OCF₃, PAVE et MOVE selon la définition (i) étant particulièrement préférés.

15. Procédé [procédé (P1)] pour la préparation du polymère (P-1) tel que défini selon la revendication 7, ledit procédé (P1) comprenant les étapes consistant à :
a*) mettre en contact au moins un polymère de (per)fluoropolyéther peroxydique [PFPE peroxy] avec
- au moins un composé perfluoré de formule (X-p) : 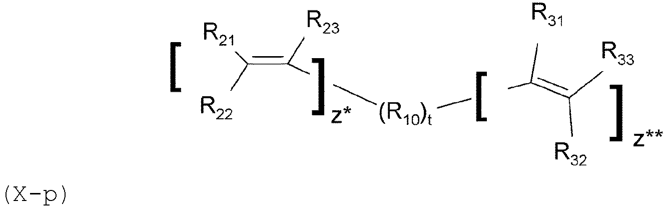 dans laquelle
chacun parmi R₂₁ à R₂₃ et R₃₁ à R₃₃ est indépendamment un atome de fluor, un groupement alkyle perfluoré ayant de 1 à 3 atomes de carbone,
R₁₀ est un atome d'oxygène, ou une chaîne alkyle perfluorée comprenant de 2 à 18 atomes de carbone, préférablement interrompue par et/ou comprenant au moins un atome d'oxygène,
t vaut zéro ou 1, préférablement 1 ;
chacun parmi z* et z** vaut indépendamment 1 ou 2 ; et
- au moins un composé [composé (O)] choisi dans le groupe comprenant, préférablement constitué de :
(i) une oléfine entièrement halogénée comprenant de 2 à 8 atomes de carbone, telle que le tétrafluoroéthylène (TFE), l'hexafluoropropylène (HFP), le chlorotrifluoroéthylène (CTFE) ;
(ii)
CF₂=CFOR_{f},
dans lesquelles
R_{f} est un groupement C₁-C₆ (per)fluoroalkyle, préférablement -CF₃, -C₂F₅, -C₃F₇ (également désigné par « PAVE » ci-après) ; un groupement C₁-C₁₂ [(per)fluoro]-oxyalkyle comprenant des atomes d'oxygène caténaires, plus préférablement perfluoro-2-propoxypropyle (également appelé « perfluoro-oxy-alkyl-vinyl éthers » ci-après) ; un groupement -CF₂OR_{f2} (également appelé « perfluoro-méthoxy-vinyl éthers » ou « MOVE » ci-après) où R_{f2} est choisi dans le groupe constitué par les C₁-C₆ perfluoro-alkyles ; les C₅-C₆ perfluoro-alkyles cycliques, et les C₂-C₆ perfluoro-oxy-alkyles, comprenant au moins un atome d'oxygène caténaire, préférablement R_{f2} est -CF₂CF₃ (MOVE1), -CF₂CF₂OCF₃ (MOVE2), ou -CF₃ (MOVE3) ;
(iii) les perfluorodioxoles répondant à la formule : 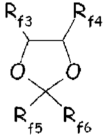
dans laquelle chacun parmi R_{f3}, R_{f4}, R_{f5}, R_{f6}, égaux ou différents les uns des autres, est choisi indépendamment dans le groupe constitué par des atomes de fluor et des groupements C₁-C₆ (per) fluoroalkyle, comprenant éventuellement un ou plusieurs atomes d'oxygène, tel que notamment -CF₃, -C₂F₅, -C₃F₇, -OCF₃, -OCF₂CF₂OCF₃ ;
dans lesquelles
la quantité du composé de formule (X-p) est inférieure à 5% en poids de la quantité de PFPE peroxy ;
b*) laisser ledit PFPE peroxy, ledit composé de formule (X-p) et ledit au moins un composé (O) réagir en présence d'un rayonnement UV ou d'un chauffage ;
c*) fluorer, obtenant ainsi ledit copolymère (P-1).

16. Procédé [procédé (P2-a)] pour la préparation du copolymère (P-2) tel que défini selon la revendication 8, ledit procédé (P2-a) comprenant les étapes consistant à :
a') mettre en contact au moins un polymère de (per)fluoropolyéther peroxydique [PFPE peroxy] avec au moins un composé (O) tel que défini ci-dessus ;
b') laisser ledit PFPE peroxy et ledit composé (O) réagir en présence d'un rayonnement UV ou d'un chauffage ;
c') stopper ledit rayonnement UV ou chauffage ;
d') mettre en contact le mélange réactionnel avec au moins un composé perfluoré de formule (X-p) : 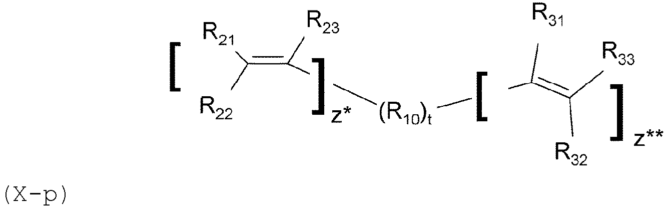 dans laquelle
chacun parmi R₂₁ à R₂₃ et R₃₁ à R₃₃ est indépendamment un atome de fluor, un groupement alkyle perfluoré ayant de 1 à 3 atomes de carbone,
R₁₀ est un atome d'oxygène, ou une chaîne alkyle perfluorée comprenant de 2 à 18 atomes de carbone, éventuellement interrompue par et/ou comprenant au moins un atome d'oxygène,
t vaut zéro ou 1, préférablement 1 ;
chacun parmi z* et z** vaut indépendamment 1 ou 2,
dans lesquelles
la quantité du composé de formule (X-p) est inférieure à 5% en poids de la quantité de PFPE peroxy ;
e') laisser la réaction se dérouler en présence d'un rayonnement UV ou d'un chauffage ; et
f') fluorer, obtenant ainsi ledit copolymère (P2).

17. Procédé [procédé (P2-b)] pour la préparation du copolymère (P-2) tel que défini selon la revendication 8, ledit procédé (P2-b) comprenant les étapes consistant à :
a") mettre en contact au moins un polymère de (per) fluoropolyéther peroxydique [PFPE peroxy] avec au moins un composé perfluoré de formule (X-p) : 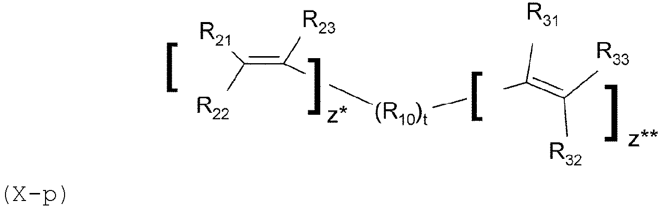 dans laquelle
chacun parmi R₂₁ à R₂₃ et R₃₁ à R₃₃ est indépendamment un atome de fluor, un groupement alkyle perfluoré ayant de 1 à 3 atomes de carbone,
R₁₀ est un atome d'oxygène, ou une chaîne alkyle perfluorée comprenant de 2 à 18 atomes de carbone, éventuellement interrompue par et/ou comprenant au moins un atome d'oxygène,
t vaut zéro ou 1, préférablement 1 ;
chacun parmi z* et z** vaut indépendamment 1 ou 2,
dans lesquelles
la quantité du composé de formule (X-p) est inférieure à 5% en poids de la quantité de PFPE peroxy ;
b") laisser ledit PFPE peroxy et ledit composé de formule (X-p) réagir en présence d'un rayonnement UV ou d'un chauffage ;
c") stopper ledit rayonnement UV ou chauffage ;
d") mettre en contact le mélange réactionnel obtenu à l'étape c") avec au moins un composé (O) tel que défini ci-dessus ;
e") laisser la réaction se dérouler en présence d'un rayonnement UV ou d'un chauffage ; et
f") fluorer, obtenant ainsi ledit copolymère (P2).

18. Composition [composition (CL)] comprenant au moins un copolymère (P) tel que défini selon l'une quelconque des revendications 1 à 8 ou un mélange (P) tel que défini selon la revendication 9, au moins une huile de base choisie dans le groupe constitué par les huiles de base partiellement fluorées, entièrement fluorées et hydrogénées, à condition que ladite huile de base soit capable de former une solution avec ledit copolymère (P), et éventuellement au moins un additif choisi parmi les agents épaississants, les agents antirouille, les antioxydants, les stabilisants thermiques, les améliorants de point d'écoulement, les agents anti-usure, y compris ceux pour hautes pressions, les dispersants, les traceurs, les colorants, le talc et les charges inorganiques.

19. Procédé pour lubrifier au moins une surface d'au moins un article, ledit procédé comprenant la mise en contact d'au moins un copolymère (P) tel que défini selon les revendications 1 à 8, ou dudit mélange (P) tel que défini selon la revendication 9, ou de ladite composition (CL) telle que définie selon la revendication 18, avec ladite au moins une surface.

20. Procédé selon la revendication 19, dans lequel ledit article est choisi parmi les pompes destinées à être utilisées dans des applications pétrolières et gazières, telles que les pompes électriques submersibles, les machines rotatives, telles que les turbines à vapeur et les turbines à gaz ; les connecteurs électriques ; les roulements d'embrayages de ventilateurs ou de ventilateurs de refroidissement ; ou les embrayages automatiques pour camions lourds, plus particulièrement les roulements desdits embrayages.

21. Procédé pour contrer les vibrations et/ou les chocs dans un dispositif, ledit procédé comprenant la fourniture d'un appareil comprenant un dispositif amortisseur, ledit dispositif amortisseur comprenant au moins un copolymère (P) tel que défini selon les revendications 1 à 8, ou ledit mélange (P) tel que défini selon la revendication 9 ou ladite composition (CL) telle que définie selon la revendication 18.
